# EUROPÄISCHE PATENTSCHRIFT

(11) **EP 3 922 379 B1**
(45) Veröffentlichungstag und Bekanntmachung des Hinweises auf die Patenterteilung: **13.03.2024**
(21) Anmeldenummer: 20179001.1
(22) Anmeldetag: 09.06.2020
(51) Int. Cl.: B22D 17/00, B22D 17/32, B22D 25/06, G06N 3/084, G06N 3/045

(54) **VERFAHREN ZUR BESTIMMUNG MINDESTENS EINES HERSTELLUNGSPARAMETERS EINES WERKSTÜCKS MIT AMORPHEN EIGENSCHAFTEN**
METHOD FOR DETERMINING AT LEAST ONE PRODUCTION PARAMETER OF A WORKPIECE WITH AMORPHOUS PROPERTIES
PROCÉDÉ DE DÉTERMINATION D'AU MOINS UN PARAMÈTRE DE FABRICATION D'UNE PIECE AVEC UNE STRUCTURE AMORPHE

(43) Veröffentlichungstag der Anmeldung: 15.12.2021
(73) Patentinhaber: Heraeus Amloy Technologies GmbH, 63450 Hanau (DE)
(72) Erfinder: WACHTER, Hans-Jürgen, 63450 Hanau (DE); MILKE, Eugen, 63450 Hanau (DE); SHAKUR SHAHABI, Hamed, 63450 Hanau (DE)
(74) Vertreter: Meissner Bolte Partnerschaft mbB

(56) Entgegenhaltungen:
- US-B2- 7 761 263
- PARTHIBAN RAMASAMY ET AL: "High pressure die casting of Fe-based metallic glass", SCIENTIFIC REPORTS, Bd. 6, Nr. 1, 11. Oktober 2016 (2016-10-11), XP055690900, DOI: 10.1038/srep35258
- RENHONG TANG ET AL: "Numerical Simulation of Zr-based Bulk Metallic Glass During Continuous Casting Solidification Process", MATERIALS RESEARCH, Bd. 18, Nr. suppl 1, 23. Oktober 2015 (2015-10-23), Seiten 3-9, XP055690905, BR ISSN: 1516-1439, DOI: 10.1590/1516-1439.319814

## Beschreibung

Die Erfindung betrifft ein Verfahren zur Bestimmung mindestens eines Herstellungsparameters eines zu fertigendes Werkstücks, ein Herstellungsverfahren zur Herstellung eines Werkstücks, ein computerlesbares-Speichermedium und ein Konstruktionssystem.

Amorphe Metalle sind eine neuartige Werkstoffklasse, die bei anderen Werkstoffen nicht realisierbare physikalische Eigenschaften bzw. Kombinationen von Eigenschaften aufweisen. Von amorphen Metallen spricht man, wenn Metalllegierungen auf atomarer Ebene keine kristalline, sondern eine amorphe Struktur aufweisen. Die für Metalle ungewöhnliche amorphe Atomanordnung führt zu einzigartigen Kombinationen physikalischer Eigenschaften. Amorphe Metalle sind im Allgemeinen härter, korrosionsbeständiger und fester als gewöhnliche Metalle bei gleichzeitig hoher Elastizität. So entstehen keine verschiedenen Oberflächenpotentiale, sodass keine Korrosion entstehen kann.

Seit ihrer Entdeckung am California Institute of Technology sind metallische Gläser Gegenstand umfangreicher Forschung. Im Laufe der Jahre gelang es, die Prozessierbarkeit und Eigenschaften dieser Materialklasse kontinuierlich zu verbessern. Waren die ersten metallischen Gläser noch einfache, binäre (aus zwei Komponenten aufgebaute) Legierungen, deren Herstellung Abkühlgeschwindigkeit im Bereich von 106 Kelvin pro Sekunde (K/s) erforderten, lassen sich neuere, komplexere Legierungen bereits bei deutlich geringeren Abkühlgeschwindigkeiten im Bereich einiger K/s in den Glaszustand überführen. Dies hat erheblichen Einfluss auf die Prozessführung sowie die realisierbaren Werkstücke. Die Abkühlgeschwindigkeit, ab der eine Kristallisation der Schmelze ausbleibt und die Schmelze im Glaszustand erstarrt, wird als kritische Abkühlgeschwindigkeit bezeichnet. Die kritische Abkühlgeschwindigkeit ist eine systemspezifische, stark von der Zusammensetzung der Schmelze abhängige Größe, welche zudem die maximal erreichbaren Bauteildicken festlegt. Bedenkt man, dass die in der Schmelze gespeicherte Wärmeenergie ausreichend schnell durch das System abtransportiert werden muss, wird klar, dass sich aus Systemen mit hohen kritischen Abkühlgeschwindigkeiten lediglich Werkstücke mit geringer Dicke fertigen lassen. Anfänglich wurden metallische Gläser daher meist nach dem Schmelzspinnverfahren (Englisch: "melt spinning") hergestellt. Die Schmelze wird hierbei auf ein rotierendes Kupferrad abgestreift und erstarrt glasartig in Form von dünnen Bändern bzw. Folien mit Dicken im Bereich einiger hundertstel bis zehntel Millimeter. Durch die Entwicklung neuer, komplexer Legierungen mit deutlich geringeren kritischen Abkühlgeschwindigkeiten, können zunehmend andere Herstellungsverfahren genutzt werden. Heutige Massivglas-bildende metallische Legierungen lassen sich bereits durch Gießen einer Schmelze in gekühlte Kupferkokillen in den Glaszustand überführen. Die realisierbaren Bauteildicken liegen dabei legierungsspezifisch im Bereich einiger Millimeter bis Zentimeter. Derartige Legierungen werden als metallische Massivgläser (Englisch: "bulk metallic glasses", BMG) bezeichnet. Heutzutage ist eine Vielzahl solcher Legierungssysteme bekannt.

Die Unterteilung metallischer Massivgläser erfolgt gewöhnlich anhand der Zusammensetzung, wobei man das Legierungselement mit dem höchsten Gewichtsanteil als Basiselement bezeichnet. Die bestehenden Systeme umfassen beispielsweise Edelmetall-basierte Legierungen wie Gold-, Platin-, und Palladium-basierte metallische Massivgläser, frühe Übergangsmetall basierte Legierungen wie z.B. Titan- oder Zirkonium-basierte metallische Massivgläser, späte Übergangsmetall-basierte Systeme auf Basis von Kupfer-, Nickel- oder Eisen, aber auch Systeme auf Basis von seltenen Erden, z.B. Neodym oder Terbium.

Metallische Massivgläser weisen im Vergleich zu klassischen kristallinen Metallen typischer Weise folgende Eigenschaften auf:
- eine höhere spezifische Festigkeit, was zum Beispiel dünnere Wandstärken ermöglicht,
- eine höhere Härte, wodurch die Oberflächen besonders kratzfest sein können,
- eine viel höhere elastische Dehnbarkeiten und Resilienzen,
- eine thermoplastische Formbarkeit und
- eine höhere Korrosionsbeständigkeit.

Aufgrund ihrer vorteilhaften Eigenschaften wie z.B. einer hohen Festigkeit und dem Ausbleiben einer Erstarrungsschwindung sind metallische Gläser, insbesondere metallische Massivgläser, sehr interessante Konstruktionswerkstoffe, die sich prinzipiell für die Herstellung von Bauteilen in Serienfertigungsverfahren wie dem Spritzguss eignen, ohne dass weitere Bearbeitungsschritte nach erfolgter Formgebung zwingend erforderlich wären. Um beim Abkühlen aus der Schmelze eine Kristallisation der Legierung zu verhindern, muss eine kritische Abkühlgeschwindigkeit überschritten werden. Je größer jedoch das Volumen der Schmelze ist, desto langsamer (bei ansonsten unveränderten Bedingungen) kühlt die Schmelze ab. Wird eine bestimmte Probendicke überschritten, kommt es zu einer Kristallisation, bevor die Legierung amorph erstarren kann.

Neben den hervorragenden mechanischen Eigenschaften metallischer Gläser ergeben sich aus dem Glaszustand auch einzigartige Prozessierungsmöglichkeiten. So lassen sich metallische Gläser nicht nur durch schmelzmetallurgische Verfahren formen, sondern auch über ein thermoplastisches Formen bei vergleichsweise niedrigen Temperaturen analog zu thermoplastischen Kunststoffen oder Silikatgläsern formgebend verarbeiten. Hierzu wird das metallische Glas zunächst über den Glasübergangspunkt erwärmt und verhält sich dann wie eine hochviskose Flüssigkeit, die bei relativ niedrigen Kräften umgeformt werden kann. Im Anschluss an die Verformung wird das Material wieder unter die Glasübergangtemperatur abgekühlt.

Bei der Verarbeitung von amorphen Metallen wird die natürliche Kristallisation durch rasches Abkühlen (Einfrieren im schmelzflüssigen Zustand) der Schmelze unterbunden, sodass den Atomen die Beweglichkeit genommen wird, bevor sie eine Kristallanordnung einnehmen können. Viele Eigenschaften kristalliner Materialen werden durch Störungen im atomaren Aufbau, sogenannte Gitterdefekte (Leerstellen, Versetzungen, Korngrenzen, Phasengrenzen, etc.), beeinflusst bzw. bestimmt.

Durch das schnelle Abkühlen wird der Schrumpf des Materials reduziert, sodass bei amorphen Metallen genauere Bauteilgeometrien erreicht werden können. Plastische Verformung erfolgt erst bei Dehnungen über 2 %. Im Vergleich dazu verformen sich kristalline, metallische Werkstoffe in der Regel bereits bei deutlichen geringeren Dehnungen (<0.5 %) irreversibel. Die Kombination aus hoher Streckgrenze bei hoher elastischer Dehnung resultiert zudem in einem hohen Speichervermögen an elastischer Energie.

Die Wärmeleitfähigkeit des verwendeten Materials setzt der Abkühlgeschwindigkeit jedoch eine physikalische Grenze, da die im Bauteil enthaltene Wärme über die Oberfläche an die Umgebung abgegeben werden muss. Dies führt zu Einschränkungen in der Herstellbarkeit von Bauteilen und in der Anwendbarkeit von Herstellungsverfahren.

Es sind unterschiedliche Verfahren zur Herstellung von Werkstücken aus amorphen Metallen bekannt. So ist es möglich, Werkstücke unter Verwendung von additiven Fertigungsverfahren, wie dem 3D-Druck, herzustellen. Dabei können die amorphen Eigenschaften des Werkstücks durch das Einstellen der Prozessparameter, wie der Scan-Geschwindigkeit, der Energie des Laserstrahls oder des abzufahrenden Musters, sichergestellt werden.

Ein Vorteil der additiven Fertigungstechnik ist, dass prinzipiell jede erdenkliche Geometrie realisiert werden kann. Ferner kann es von Vorteil sein, dass bei additiven Fertigungsverfahren kein gesonderter Kühlprozess notwendig ist, da durch das schichtweise Herstellen des Werkstücks und einer Einstellung der Größe des Schmelzpools über Laserenergie und Verfahrweg des Lasers eine gute Auskühlung gewährleistet sein kann.

Nachteilig bei additiven Fertigungsverfahren sind die zum Zeitpunkt der Anmeldung geringe Aufbauraten gerade bei großdimensionierten Werkstücken. Ferner muss hochreines Pulvermaterial als Ausgangsmaterial für den additiven Fertigungsprozess verwendet werden. Sind Verunreinigungen in dem Material vorhanden, so kann es an den Stellen der Verunreinigung zu Kristallisation kommen, d.h. zu nicht amorphen Metall, welches zu einer Verschlechterung der mechanischen und chemischen Eigenschaften führen kann. Oberflächennah kann es wegen der Verunreinigung notwendig sein, das Werkstück nachzubearbeiten, was aufwendig ist. Darüber hinaus kommt es bei der additiven Fertigung immer zu einer gewissen Rauigkeit an der Oberfläche des Werkstücks, sodass dies in den meisten Fällen durch Schleifen oder Fräsen nachbearbeitet werden muss.

Eine weitere Fertigungsmöglichkeit bietet das Spritzgießen. Dabei können zum Zeitpunkt der Anmeldung Gewichte von Werkstücken im Bereich von 80-100g realisiert werden. Üblicherweise wird das zu verwendende Material mittels induktivem Aufheizen innerhalb von ca. 20 Sekunden auf ca. 1050°C erhitzt und homogenisiert.

Nach dem Aufheizen wird das schmelzflüssige Material mittels eines Stempels in eine Form gedrückt. Dabei ist es für die Materialeigenschaften wichtig, dass wenn die Form vollständig mit Material gefüllt ist, das Material innerhalb der Form überall eine Temperatur oberhalb des Materialschmelzpunktes aufweisen sollte. Um amorphe Materialeigenschaften zu erzielen, muss das flüssige Material innerhalb der Form anschließend schnell auf unterhalb der Glasumwandlungstemperatur abgekühlt werden.

Die möglichen Geometrien beim Spritzgießen sind aufgrund der Abkühlgeschwindigkeit des Materials auf Wandstärken von 0,3 -7,0 mm begrenzt. Bei größeren Wandstärken ist die Abkühlgeschwindigkeit zu gering, sodass sich kristalline Strukturen ausbilden bevor das Material auf unterhalb der Glasumwandlungstemperatur abgekühlt ist. Bei kleineren Wandstärken kühlt das Material abhängig von der zu füllenden Länge zu schnell ab und erstarrt bevor die Form vollständig gefüllt ist.

Das Herstellen amorpher Metalle ist schwierig. Dabei ist ein detailliertes Wissen über die zu verwendende Legierung für ein bestimmtes Werkstück erforderlich. Auch muss bekannt sein, welchen Anforderungen das Werkstück ausgesetzt wird. Darüber hinaus hat das verwendete Herstellungsverfahren einen großen Einfluss darauf, ob die gewünschte Bauteilgeometrie mit den gewünschten Eigenschaften überhaupt erreichbar ist. Anwender ohne spezifische Vorbildung sind somit nicht in der Lage, entsprechende Bauteile in der gewünschten Qualität zu fertigen.

Aus dem Stand der Technik ist es bekannt, die Eigenschaften von Werkstücken zu simulieren, z.B. mittels einer Finite-Elemente Methode. Dabei kann zum Beispiel das Verhalten von Werkstücken bei verschiedenen Lastfällen mit vorgegebenen Materialien beurteilt werden. Aus dem Verhalten kann auf die mechanischen Eigenschaften geschlossen werden.

Aus der US 7, 761,263 B2 ist beispielsweise ein regebasiertes System bekannt, bei dem das Design eines Gussteils optimiert werden kann. Dazu empfängt das System ein Produktdesign, welches durch einen Gussprozess hergestellt werden soll. Das Produktdesign kann eine Anfangsproduktgeometrie angeben. Darüber hinaus kann das dort beschriebene System auch gewünschte mechanische Eigenschaften als Eingabe empfangen.

Darüber hinaus ist auch möglich, mittels einer Simulation des Wärmeverlaufs zu beurteilen, ob amorphe Eigenschaften in einem Werkstück nach der Produktion auftreten werden. Nachteilig an diesen Methoden ist, dass das Ausführen einer Simulation eines Werkstücks sehr aufwendig ist. Der Nutzer muss also sehr lange warten, bis er eine Einschätzung dahingehend hat, ob ein zu fertigendes Werkstück bei einem vorgegebenen Herstellungsverfahren und einer vergebenen Legierung über die gewünschten Eigenschaften verfügt.

Das Angeben der zu verwendenden Legierung und des Herstellungsverfahrens erfordert ferner Expertenwissen. Wie oben ausgeführt führen unterschiedliche Fertigungsverfahren nicht immer zu amorphen Eigenschaften bei dem hergestellten Werkstück. Somit ist es an dem Experten zu beurteilen, welche Fertigungsverfahren für welche Bauteilgeometrie in Frage kommen. Darüber hinaus existiert eine Wechselwirkung zwischen Fertigungsverfahren, Werkstückgeometrie und Legierung, sodass eine erste Legierung bei einem ausgewählten Fertigungsverfahren und einer bestimmten Werkstückgeometrie bei einem ersten Fertigungsverfahren zu amorphen Eigenschaft führt. Eine zweite Legierung wird jedoch in der Konstellation nicht zu amorphen Eigenschaften führen. Die zweite Legierung könnte jedoch bei der Auswahl eines anderen Fertigungsverfahrens zu amorphen Eigenschaften bei dem hergestellten Werkstück führen.

Die Interaktion der einzelnen Parameter ist daher komplex und für einen Laien nicht zu verstehen. Somit ist die wirtschaftliche Verwendung amorpher Metalle nur Nutzern mit Expertenwissen vorbehalten bzw. wird die Fertigung eines Werkstücks zu einem großen Ausschuss führen.

Ausgehend von den genannten Nachteilen im Stand der Technik ist es daher Aufgabe der Erfindung, die Herstellung von Werkstücken mit amorphen Eigenschaften zu vereinfachen. Es ist insbesondere Aufgabe der Erfindung, die Fertigung von Werkstücken mit amorphen Eigenschaften auch für Laien zu ermöglichen. Es ist ferner insbesondere Aufgabe der Erfindung, amorphe Eigenschaften bei einem zu fertigenden Werkstück sicherzustellen. Es ist weiter insbesondere Aufgabe der Erfindung, den Ausschuss bei der Fertigung von Werkstücken mit amorphen Eigenschaften zu reduzieren. Es ist ferner insbesondere Aufgabe der Erfindung, die Fertigung von Werkstücken mit amorphen Eigenschaften zu beschleunigen.

Die Aufgabe wird gelöst durch ein Verfahren zur Bestimmung mindestens eines Herstellungsparameters, eines zur fertigenden Werkstücks nach Anspruch 1, durch ein Herstellungsverfahren zur Herstellung eines Werkstücks nach Anspruch 11, durch ein computerlesbares-Speichermedium nach Anspruch 12 und durch ein Konstruktionssystem nach Anspruch 13.

Die Aufgabe wird insbesondere gelöst durch ein Computer-implementiertes Verfahren zur Bestimmung mindestens eines Herstellungsparameters eines zu fertigenden Werkstücks mit amorphen Eigenschaften, die folgenden Schritte aufweisend:
- Simulieren einer Abkühlgeschwindigkeit eines Referenzwerkstücks während der Fertigung für mindestens eine vorbestimmte Legierung und mindestens ein vorbestimmtes Herstellungsverfahren unter Berücksichtigung mindestens eines Herstellungsverfahrens und unter Berücksichtigung von Parametern des Herstellungsverfahrens;
- Speichern von Referenz-Simulationsdaten;
- Empfangen einer Bauteilbeschreibung, die ein zu fertigendes Werkstück angibt, wobei die Bauteilbeschreibung durch eine Datenstruktur angegeben ist und wobei die Bauteilbeschreibung eine Geometrie des zu fertigenden Werkstücks und eine Legierung angibt;
- Bestimmen eines Referenzbauteils für zumindest einen Teil der Bauteilbeschreibung, wobei das Bestimmen unter Verwendung einer Mustererkennung ausgeführt wird, wobei das Bestimmen des Referenzbauteils ein Segmentieren der Bauteilbeschreibung in eine Vielzahl von Bauteilabschnitten umfasst, wobei die Mustererkennung für mindestens einen Bauteilabschnitt ausgeführt wird;
- Auslesen von ersten Simulationsdaten, insbesondere aus einer Datenbankeinheit, die mindestens eine Eigenschaft des Referenzbauteils angeben, wobei die mindestens eine Eigenschaft die simulierte Abkühlgeschwindigkeit des Referenzwerkstücks angibt, wobei die gespeicherten Referenz-Simulationsdaten als erste Simulationsdaten ausgelesen werden;
- Bestimmen mindestens eines Herstellungsparameters zur Fertigung des Werkstücks unter Verwendung der ersten Simulationsdaten, also auch unter Verwendung der Parameter des Herstellungsverfahrens und der simulierten Abkühlgeschwindigkeit des Referenzbauteils, derart, dass das Werkstück amorphe Eigenschaften aufweist.

Im Rahmen dieser Anmeldung bedeutet das Vorhandensein von amorphen Eigenschaften bei einem Werkstück, dass dieses Werkstück (Material-)Strukturen aufweist, die zu amorphen Eigenschaften führen, insbesondere eine amorphe, d.h. nicht kristalline, Struktur. Insbesondere kann das Vorhandensein von amorphen Eigenschaften bei einer Legierung im Rahmen dieser Anmeldung bedeuten, dass die Legierung einen Anteil von mindestens 70% amorphen Strukturen aufweist, vorzugsweise 80% amorphen Strukturen, besonders bevorzugt mindestens 95% amorphen Strukturen.

Ein Kern der Erfindung besteht darin, durch das Verwenden von bestehenden Simulationsdaten von Referenzbauteilen auf die Simulation von Herstellungsprozessen des zu fertigenden Werkstücks oder Ähnlichem verzichten zu können. Somit kann ohne eine aufwendige Simulation des zu fertigenden Werkstücks vor der eigentlichen Fertigung sichergestellt werden, dass das gefertigte Werkstück amorphe Eigenschaften aufweist. Dabei geht das Verfahren über das bloße Feststellen von amorphen Eigenschaften hinaus. Vielmehr wird durch das Verfahren mindestens ein Herstellungsparameter bestimmt, mit dem amorphe Eigenschaften bei einem zu fertigenden Werkstück sichergestellt werden können.

Die Bauteilbeschreibung ist durch eine Datenstruktur angegeben. Zum Beispiel kann eine Bauteilbeschreibung durch eine CAD-Datei angegeben sein. Es ist jedoch auch möglich, dass die Bauteilbeschreibung durch eine Datenstruktur einer Programmiersprache implementiert ist. Die Bauteilbeschreibung gibt eine Geometrie des zu fertigenden Werkstücks an. Zusätzlich kann eine Bauteilbeschreibung eine Geometrie des Referenzbauteils angeben. Eine Geometrie kann z.B. die Dimensionen des Werkstücks angeben. Auch kann durch eine Bauteilbeschreibung mindestens ein Material, z.B. eine Legierung, eines Werkstücks angegeben sein. Auch kann eine Bauteilbeschreibung ein komplexes Werkstück angeben, wobei das komplexe Werkstück aus einer Vielzahl von einzelnen Werkstücken zusammengesetzt sein kann. Insbesondere können durch eine Bauteilbeschreibung die Verbindungsstellen zwischen einzelnen Werkstücken eines komplexen Werkstücks angegeben sein.

Durch eine Segmentierung der Bauteilbeschreibung können einzelne Bestandteile eines zu fertigenden Werkstücks erkannt werden. Durch eine Segmentierung können somit Bauteilabschnitte erkannt werden. Ein Bauteilabschnitt kann ein einzelnes Werkstück eines komplexen Werkstücks angeben und/oder Teilabschnitte eines einzelnen Werkstücks. So kann ein erster Bauteilabschnitt zum Beispiel einen Gewindeabschnitt einer Schraube angeben und ein zweiter Bauteilabschnitt kann einen Schraubenkopf angeben. Die Segmentierung kann somit z.B. unter Berücksichtigung der Geometrie des zu fertigenden Werkstücks ausgeführt werden. Auch kann die Segmentierung unter Berücksichtigung von Materialien und/oder Materialeigenschaften einzelner Abschnitte der Bauteilbeschreibung ausgeführt werden. Die Materialien und/oder Materialeigenschaften von einzelnen Abschnitten der Bauteilbeschreibung können durch die Bauteilbeschreibung angegeben sein.

Die Musterkennung kann in einer Ausführungsform einem Bauteilabschnitt ein Referenzbauteil zuordnen. Für das zugeordnete Referenzbauteil können die ersten Simulationsdaten ausgelesen werden, um den mindestens einen Herstellungsparameter zu bestimmen.

Die Mustererkennung kann als eine Klassifikation ausgebildet sein. Dabei können die Klassen der Klassifikation durch unterschiedliche Bauteiltypen gebildet sein. Einem Referenzbauteil kann ebenfalls ein Bauteiltyp zugeordnet sein, sodass durch ein Abgleichen des Bauteiltyps des Referenzbauteils mit dem Bauteiltyp des zu fertigenden Werkstücks bzw. des Bauteilabschnitts des zu fertigenden Werkstücks, dem zu fertigenden Werkstücks bzw. dem Bauteilabschnitt ein Referenzbauteil zugeordnet werden kann. Darüber hinaus kann das Abgleichen des Typs von dem zu fertigenden Werkstück bzw. eines Bauteilabschnitts als Vorauswahl verwendet werden kann, um eine Vielzahl von Kandidatenreferenzbauteilen zu bestimmen, aus denen mittels der weiteren Mustererkennung das Referenzbauteil ausgewählt wird.

Mit den vorstehend beschriebenen Ausführungsformen ist es somit möglich, ein Referenzbauteil auf effiziente Art und Weise zu bestimmen, sodass Rechenressource eingespart werden.

In einer Ausführungsform kann eine/die Segmentierung ein Aufteilen einer durch die Bauteilbeschreibung angegebenen Bauteilgeometrie unter Verwendung von Grundformen und/oder Verbindungsstellen umfassen.

Grundformen können zum Beispiel als geometrische Grundformen, wie Quader, Kugeln und/oder Pyramiden ausgebildet sein. Es ist jedoch ebenfalls denkbar, dass Grundformen bzw. Prototypen Bauteile angeben, z.B. eine prototypische Schraube und/oder auch eine prototypische Zange. Das Segmentieren eines Werkstücks in Grundformen kann in der Regel sehr effizient implementiert werden. Dabei ist es von Vorteil, dass eine Vielzahl von Grundformen automatisiert erzeugt werden können, z.B. durch Verändern der Parameter, wie Höhe, Breite und Tiefe bei einem Quader oder dem Durchmesser bei einer Kugel. Somit ist es sehr effizient möglich, eine große Datenbank mit einer Vielzahl von Grundformen aufzubauen.

In einer Ausführungsform kann das Verfahren ein Anlernen einer Segmentiereinheit unter Verwendung von Referenzbauteilen umfassen, die optional jeweils Teile komplexer Bauteile sein können, wobei das Segmentieren insbesondere unter Verwendung der Segmentiereinheit ausgeführt werden kann.

Durch ein Anlernen der Segmentiereinheit unter Verwendung von Referenzbauteilen ist es möglich, dass die angelernt Segmentiereinheit ein zu fertigendes Werkstück bzw. die zugehörige Bauteilbeschreibung in eben jene Referenzbauteile zerlegt bzw. segmentiert. Somit kann erreicht werden, dass immer alle zur Verfügung stehenden Referenzbauteile bei der Segmentierung berücksichtigt werden, wodurch eine optimale Segmentierung erreicht wird. Insgesamt wird somit das Bestimmen des mindestens einen Herstellungsparameters verbessert.

In einer Ausführungsform kann das Bestimmen des Referenzbauteils ein Laden eines Referenzdatensatzes umfassen, insbesondere aus einer Datenbankeinheit, wobei der Referenzdatensatz eine Vielzahl von Referenzbauteilen angeben kann und wobei das Bestimmen ein Auswählen des Referenzbauteils aus dem Referenzdatensatz unter Verwendung der Mustererkennung umfassen kann.

In einer Ausführungsform kann die Mustererkennung ein Klassifizieren, insbesondere unter Verwendung eines künstlichen neuronalen Netzes, umfassen, wobei das Klassifizieren Abschnitten, insbesondere Pixeln, Voxeln, Volumenelementen und/oder Teilabschnitten der Bauteilgeometrie, ein Referenzbauteil, insbesondere eines/des Referenzdatensatzes, zuordnen kann.

Eine besonders vorteilhafte Implementierung der Mustererkennung ergibt sich durch die Verwendung einer Klassifikation. Dabei haben sich insbesondere künstliche neuronale Netzwerke als besonders effizient und genau erwiesen. Insbesondere Convolutional Neuronal Networks sind geeignet. Jedoch sind grundsätzlich auf andere Klassifikationsmechanismen denkbar, wie sogenannten Support Vector Machines oder Bayes-Netzwerke. Durch das Zuweisen einzelner Pixel, Voxel, Volumenelementen und/oder Teilabschnitten zu einzelnen Klassen ist eine besonders einfache Implementierung angegeben. Das Klassifzieren einzelner Volumenelemente hat den Vorteil, dass eine Bauteilbeschreibung sehr feingliedrig segmentiert wird.

In einer Ausführungsform können die ersten Simulationsdaten eine Abkühlgeschwindigkeit des Referenzbauteils für eine vorbestimmte Legierung und ein vorbestimmtes Herstellungsverfahren angeben.

Für das Sicherstellen von amorphen Eigenschaften in dem zu fertigenden Werkstück ist die Abkühlgeschwindigkeit maßgeblich. Die Abkühlgeschwindigkeit hängt einerseits von der verwendeten Legierung und auch von dem Herstellungsverfahren ab. Darüber hinaus hängt die Abkühlgeschwindigkeit von der Geometrie des Referenzbauteils ab. Es ist weiter möglich, dass die Simulationsdaten eine Abkühlgeschwindigkeit für jedes Volumenelement des Referenzbauteils in Abhängigkeit der verwendeten Legierung und des Herstellungsverfahrens angeben. Somit ist es möglich, festzustellen, welche Bereiche des Referenzbauteils bei einer bestimmen Legierung und/oder bei einem bestimmten Herstellungsverfahren über amorphe Eigenschaften verfügen.

In einer Ausführungsform können die ersten Simulationsdaten mechanische Eigenschaften des Referenzbauteils für eine vorbestimmte Legierung, ein vorbestimmtes Herstellungsverfahren und/oder eine Abkühlgeschwindigkeit angeben.

Aus der Abkühlgeschwindigkeit in Kombination mit einer Legierung und/oder einem Herstellungsverfahren könne mechanische Eigenschaften abgeleitet werden. So ist es möglich, eine Biegefestigkeit und/oder eine Härte des Referenzbauteils anzugeben. Es somit möglich aus den ersten Simulationsdaten sehr genaue Angaben über das Verhalten der Referenzbauteile zu erhalten.

In einer Ausführungsform ist das Verfahren dadurch gekennzeichnet, dass:
- das Simulieren der Abkühlgeschwindigkeit des Referenzwerkstücks während der Fertigung für eine Vielzahl von vorbestimmten Legierungen, und für eine Vielzahl von vorbestimmten Herstellungsverfahren ausgeführt wird, vorzugsweise Simulieren der Abkühlgeschwindigkeit des Referenzbauteils nach einem Einspritzvorgang bei einem Spritzgussverfahren;
- und wobei das Speichern der Referenz-Simulationsdaten, ein Speichern in einer Datenbankeinheit umfasst.

Die vorstehend beschriebene Ausführungsform beschreibt einen Fall, in dem noch keine Simulationsdaten für ein Referenzbauteil für eine bestimmte Legierung und/oder ein Herstellungsverfahren gespeichert sind. In diesem Fall ist es notwendig, Simulationsdaten zu erzeugen. Diese Simulation kann entweder vorgelagert vor einer Beurteilung eines zu fertigenden Werkstücks ausgeführt werden oder es sie kann "on-demand" ausgeführt werden, d.h. dann wenn ein Nutzer den mindestens einen Herstellungsparameter für ein zu fertigendes Werkstück bestimmen möchte. Es ist somit möglich, dass zu jedem Zeitpunkt der mindestens eine Herstellungsparameter bestimmt werden kann.

In einer Ausführungsform kann das Verfahren ein Bestimmen mindestens einer mechanischen Eigenschaft des zu fertigenden Werkstücks unter Verwendung einer simulierten Abkühlgeschwindigkeit des Referenzbauteils umfassen, wobei das Bestimmen des mindestens einen Herstellungsparameters auch unter Verwendung der bestimmten mindestens einen mechanischen Eigenschaft ausgeführt werden kann.

Die mechanischen Eigenschaften können maßgeblich von der Abkühlgeschwindigkeit abhängen. Insbesondere wenn eine kritische Abkühlgeschwindigkeit überschritten wird, d.h. amorphe Eigenschaften erreicht werden, kann es zu vorteilhaften mechanischen Eigenschaften bei dem zu fertigenden Werkstück kommen. Wenn diese mechanischen Eigenschaften bei der Bestimmung des mindestens einen Herstellungsparameters berücksichtigt werden ist es möglich, die Herstellung des zu fertigenden Werkstücks derart auszuführen, dass die bestimmten mechanischen Eigenschaften auch im fertigen Werkstück erreicht werden.

In einer Ausführungsform kann das Verfahren ein Simulieren mindestens eines mechanischen Lastfalls des zu fertigenden Werkstücks unter Verwendung von, insbesondere den, bestimmten mechanischen Eigenschaften umfassen, wobei zugeordnete Simulationsergebnisse durch zweite Simulationsdaten angegeben werden können und das Bestimmen des mindestens einen Herstellungsparameters auch unter Verwendung der zweiten Simulationsdaten ausgeführt werden kann.

Ein mechanischer Lastfall kann zum Beispiel einen Belastungstest angeben, bei dem das Verhalten des zu fertigenden Werkstücks bei einer statisch wirkenden Kraft auf einen Kraftangriffspunkt des zu fertigende Werkstücks simuliert wird. Dabei können die Biegung oder ein Brechen des Werkstücks ermittelt werden. Dabei ist denkbar, dass der mindestens eine Herstellungsparameter derart gewählt wird, dass das zu fertigende Werkstück dem Lastfall genügt, z.B. dass es nicht zu einer Beschädigung des zu fertigenden Werkstücks bei einer Belastung gemäß dem Lastfall kommt.

Mit der beschriebenen Ausführungsform wird es möglich gemacht, dass ein Nutzer vor der Herstellung die Herstellungsparameter derart bestimmen kann, dass das zu fertigende Werkstück den Anforderungen des Nutzers genügt.

In einer Ausführungsform kann das das Simulieren der Abkühlgeschwindigkeit unter Berücksichtigung von Parametern eines Herstellungsverfahrens, z.B. einer Stempelgeschwindigkeit, einer Ausgangstemperatur und/oder einer Formgeometrie ausgeführt werden. Eine Stempelgeschwindigkeit, eine Ausgangstemperatur und/oder eine Formgeometrie können z.B. Parameter eines Spritzgussverfahrens sein.

Die Simulation der Abkühlgeschwindigkeit kann sehr genau ausgeführt werden, wenn bei der Simulation die Parameter eines Herstellungsverfahrens berücksichtigt werden. Auch ist es von Vorteil die Informationen über das Herstellungsverfahren als Teil der ersten Simulationsdaten zu speichern. Damit kann ermittelt werden, wie der mindestens eine Herstellungsparameter gewählt werden muss, um die gewünschten mechanischen Eigenschaften des zu fertigenden Bauteils zu erreichen.

In einer Ausführungsform kann der mindestens eine Herstellungsparameter ein Herstellungsverfahren und eine zugeordnete Legierung angeben.

In einer Ausführungsform kann das Bestimmen des mindestens einen Herstellungsparameters ein Auswählen eines Herstellungsverfahrens mit einer zugeordneten Legierung und/oder mindestens einer mechanischen Eigenschaft umfassen.

Bei dem mindestens einen Herstellungsparameter kann es sich zum Beispiel um die zu verwendende Legierung, ein zu verwendendes Herstellungsverfahre und/oder eine mechanische Eigenschaft handeln. Durch die Wahl einer geeigneten Legierung kann zum Beispiel auf einfache Art und Weise sichergestellt werden, dass gewünschte mechanische Eigenschaften bei dem zu fertigenden Bauteil erreicht werden. In einer Ausführungsform kann der mindestens eine Herstellungsparameter daher derart gewählt werden, dass das zu fertigende Bauteil vorgegebenen Anforderungen entspricht.

In einer Ausführungsform kann eine/die Simulation einer/der Abkühlgeschwindigkeit und/oder eines/des mechanischen Lastfalls für das zu fertigende Werkstück unter Berücksichtigung mindestens einer Eigenschaft des Referenzbauteils ausgeführt werden.

Die Simulation der Abkühlgeschwindigkeit und/oder des mechanischen Lastfalls kann zum Beispiel unter Berücksichtigung einer Legierung und/oder der geometrischen Eigenschaften des Referenzbauteils ausgeführt werden. Somit kann die Simulation genauere Daten liefern, wie sich das Referenzbauteil verhalten wird, z.B. bei einem Lastfall.

In einer Ausführungsform kann eine/die Simulation einer/der Abkühlgeschwindigkeit und/oder eines/des mechanischen Lastfalls nur dann ausgeführt werden, wenn die gespeicherten ersten Simulationsdaten für ein Referenzbauteil keine Abkühlgeschwindigkeit bzw. keine Ergebnisdaten für einen identischen Lastfall angeben.

Es ist vorteilhaft, wenn die Simulation nur dann ausgeführt wird, wenn noch keine Simulationsdaten vorliegen. Somit können unnötige Simulationen verhindert werden und es werden Rechenressource eingespart.

In einer Ausführungsform kann das Referenzbauteil einen ersten Abschnitt des herzustellenden Werkstücks angeben und eine/die Simulation einer Abkühlgeschwindigkeit und/oder eines/des mechanischen Lastfalls kann für einen zweiten Abschnitt des herzustellenden Werkstücks ausgeführt werden.

Besonders vorteilhaft ist, wenn ein zu fertigendes Werkstück in eine Vielzahl von Bauteilabschnitte unterteilt wird und nur für einige der Bauteilabschnitte geeignete Referenzbauteile mit entsprechenden Simulationsdaten vorliegen. In diesem Fall ist es denkbar, dass nur jene Bauteilabschnitte simuliert werden, für die kein entsprechendes Referenzbauteil vorhanden ist. Somit kann insgesamt der Simulationsaufwand drastisch reduziert werden.

In einer Ausführungsform kann eine/die Simulation einer/der Abkühlgeschwindigkeit und/oder eines/des mechanischen Lastfalls für einen/den zweiten Abschnitt des zu fertigenden Werkstücks unter Verwendung von Simulationsdaten ausgeführt werden, die dem Referenzbauteil zugeordnet sein können.

Der erste und zweite Abschnitt können in einer Ausführungsform räumlich nebeneinander angeordnet sein.

Dadurch, dass die Simulationsdaten eines zweiten Abschnitts des zu fertigenden Werkstücks auf die Simulationsdaten eines Referenzbauteils zugreifen können, bzw. diese bei der Simulation als Eingangsdaten verwendet werden können, kann die Simulation insgesamt genauer ausgeführt werden.

In einer Ausführungsform kann das Empfangen der Bauteilbeschreibung über ein Kommunikationsnetz, insbesondere über das Internet, vorzugsweise unter Verwendung einer Anwendungsprogrammierschnittstelle, ausgeführt werden.

Es ist denkbar, dass einzelne Verfahrensschritte in einem Rechenzentrum ausgeführt werden und weitere Verfahrensschritte auf einer Fertigungsmaschine. Dabei kann eine Kommunikation zwischen den einzelnen Komponenten über das Internet erfolgen. Es ist ferner denkbar, dass der Nutzer eine Bauteilbeschreibung mittels einer Webseite oder Applikation auf einen Webserver lädt und diese dann an ein Programm zur weiteren Verarbeitung weitergeben wird. Der mindestens eine Herstellungsparameter kann dem Nutzer dann über sein Endgerät ausgeben werden und/oder direkt einer Fertigungsmaschine bereitgestellt werden.

Die Aufgabe wird ferner insbesondere gelöst durch ein Herstellungsverfahren zur Herstellung eines Werkstücks, umfassend die folgenden Schritte:
- Bestimmen mindestens eines Herstellungsparameters durch ein Verfahren nach einem der vorhergehenden Ansprüche,
- Herstellen des Werkstücks unter Verwendung des mindestens einen Herstellungsparameters.

Das Herstellen kann in einer Ausführungsform ein Auswählen einer Herstellungsmaschine unter Verwendung des mindestens einen Herstellungsparameters umfassen.

In einer Ausführungsform können eine Vielzahl von Herstellungsmaschinen vorgesehen sein, die jeweils dazu ausgebildet sind, Werkstücke zu fertigen. Zum Beispiel können additive arbeitende Herstellungsmaschinen, wie 3D-Drucker, oder Spritzgussmaschinen vorgesehen sein. Mit der beschriebenen Ausführungsform ist es nunmehr möglich, dass eine Herstellungsmaschine ausgewählt wird, sodass die Anforderungen an das zu fertigende Werkstück erfüllt werden, z. B. das Erreichen von amorphen Materialeigenschaften.

Die Aufgabe wird ferner insbesondere gelöst durch ein Computerlesbares-Speichermedium, welches Instruktionen enthält, die mindestens einen Prozessor dazu veranlassen, ein Verfahren wie es vorstehend beschrieben ist, zu implementieren, wenn die Instruktionen durch den mindestens einen Prozessor ausgeführt werden.

Es ergeben sich ähnliche oder identische Vorteile, wie sie bereits im Zusammenhang mit den vorstehenden Verfahren beschrieben sind.

Die Aufgabe wird ferner insbesondere gelöst durch ein Konstruktionssystem, Folgendes aufweisend:
- eine Empfangseinheit, die dazu ausgebildet ist, eine Bauteilbeschreibung, die ein zu fertigendes Werkstück angibt, zu empfangen wobei die Bauteilbeschreibung durch eine Datenstruktur angegeben ist und wobei die Bauteilbeschreibung eine Geometrie des zu fertigenden Werkstücks und eine Legierung angibt;
- eine Bestimmungseinheit, die dazu ausgebildet ist, für zumindest einen Teil der Bauteilbeschreibung ein Referenzbauteil zu bestimmen, wobei die Bestimmungseinheit dazu ausgebildet ist, die Bestimmung unter Verwendung einer Mustererkennung auszuführen, wobei die Bestimmungseinheit ferner dazu ausgebildet ist, ein Segmentieren der Bauteilbeschreibung in eine Vielzahl von Bauteilabschnitten auszuführen, wobei die Bestimmungseinheit dazu ausgebildet ist, die Mustererkennung für mindestens einen Bauteilabschnitt auszuführen,
   wobei die Bestimmungseinheit eine Simulationseinheit aufweist, die dazu ausgebildet ist, eine Abkühlgeschwindigkeit eines Referenzbauteils während der Fertigung für mindestens eine vorbestimmte Legierung, insbesondere einer Vielzahl von vorbestimmten Legierungen, und für mindestens ein vorbestimmtes Herstellungsverfahren, insbesondere für eine Vielzahl von vorbestimmten Herstellungsverfahren, unter Berücksichtigung mindestens eines Herstellungsverfahrens und unter Berücksichtigung von Parametern des Herstellungsverfahrens, zu simulieren;
- eine Datenbankeinheit, die dazu ausgebildet ist, Referenz-Simulationsdaten zu speichern, die die simulierte Abkühlgeschwindigkeit angeben;
- eine Leseeinheit, die dazu ausgebildet ist, die gespeicherten Referenz-Simulationsdaten als erste Simulationsdaten aus der Datenbankeinheit auszulesen;
- eine Parameterbestimmungseinheit, die dazu ausgebildet ist, mindestens einen Herstellungsparameter zur Fertigung des Werkstücks unter Verwendung der ersten Simulationsdaten anzugeben, auch unter Verwendung der Parameter des Herstellungsverfahrens und der simulierten Abkühlgeschwindigkeit des Referenzbauteils, derart, dass das Werkstück amorphe Eigenschaften aufweist.

In einer Ausführungsform kann die Bestimmungseinheit dazu ausgebildet sein, eine/die Segmentierung unter Verwendung von Grundformen und/oder Verbindungsstellen auszuführen.

In einer Ausführungsform kann die Bestimmungseinheit eine Segmentiereinheit umfassen, die dazu ausgebildet sein kann, unter Verwendung von Referenzbauteilen, die jeweils Teile komplexer Bauteile sein können, angelernt zu werden, wobei die Bestimmungseinheit ferner dazu ausgebildet sein kann, eine Segmentierung unter Verwendung der Segmentiereinheit auszuführen.

In einer Ausführungsform kann die Bestimmungseinheit dazu ausgebildet sein, einen Referenzdatensatz zu laden, insbesondere aus der Datenbankeinheit, wobei der Referenzdatensatz eine Vielzahl von Referenzbauteilen angeben kann und wobei die Bestimmungseinheit dazu ausgebildet sein kann, das Referenzbauteil aus dem Referenzdatensatz unter Verwendung einer Musterkennung auszuwählen.

In einer Ausführungsform kann die Bestimmungseinheit eine Klassifikationseinheit umfassen, die dazu ausgebildet sein kann, Abschnitten, insbesondere Pixeln, Voxeln, Volumenelementen und/oder Teilabschnitten der Bauteilgeometrie, ein Referenzbauteil, insbesondere eines/des Referenzdatensatzes, zuzuordnen.

In einer Ausführungsform kann die Bestimmungseinheit dazu ausgebildet sein, mindestens eine mechanische Eigenschaft des zu fertigenden Werkstücks unter Verwendung einer/der simulierten Abkühlgeschwindigkeit des Referenzbauteils zu bestimmen, wobei die Parameterbestimmungseinheit ferner dazu ausgebildet sein kann, das Bestimmen des mindestens einen Herstellungsparameters auch unter Verwendung der bestimmten mindestens einen mechanischen Eigenschaft auszuführen.

In einer Ausführungsform kann eine/die Simulationseinheit der Bestimmungseinheit dazu ausgebildet sein, einen mechanischen Lastfall des zu fertigenden Werkstücks unter Verwendung von, insbesondere den, bestimmten mechanischen Eigenschaften zu simulieren, wobei zugeordnete Simulationsergebnisse durch zweite Simulationsdaten angegeben werden können und die Parameterbestimmungseinheit ferner dazu ausgebildet sein kann, den mindestens einen Herstellungsparameter auch unter Verwendung der zweiten Simulationsdaten zu bestimmen.

In einer Ausführungsform kann eine/die Simulationseinheit ferner dazu ausgebildet sein, eine/die Abkühlgeschwindigkeit unter Berücksichtigung mindestens eines Herstellungsverfahrens zu simulieren, insbesondere unter Berücksichtigung von Parametern eines Herstellungsverfahrens, z.B. einer Stempelgeschwindigkeit, einer Ausgangstemperatur und/oder einer Formgeometrie.

In einer Ausführungsform kann die Parameterbestimmungseinheit dazu ausgebildet sein, ein Herstellungsverfahren mit einer zugeordneten Legierung und/oder mindestens einer mechanischen Eigenschaft auszuwählen.

In einer Ausführungsform kann ein/die Simulationseinheit dazu ausgebildet sein, eine/die Abkühlgeschwindigkeit und/oder einen/den mechanischen Lastfall für das zu fertigende Werkstück unter Berücksichtigung mindestens einer Eigenschaft des Referenzbauteils zu simulieren.

In einer Ausführungsform kann eine/die Simulationseinheit dazu ausgebildet sein, eine/die Simulation einer/der Abkühlgeschwindigkeit und/oder eines/des mechanischen Lastfalls nur dann auszuführen, wenn die gespeicherten ersten Simulationsdaten für ein Referenzbauteil keine Abkühlgeschwindigkeit bzw. keine Ergebnisdaten für einen identischen Lastfall angeben.

In einer Ausführungsform kann das Referenzbauteil einen ersten Abschnitt des herzustellenden Werkstücks angeben und eine/die Simulationseinheit kann dazu ausgebildet sein, eine/die Abkühlgeschwindigkeit und/oder einen/den mechanischen Lastfall für einen zweiten Abschnitt des herzustellenden Werkstücks zu simulieren.

In einer Ausführungsform kann eine/die Simulationseinheit dazu ausgebildet sein, eine/die Abkühlgeschwindigkeit und/oder einen/den mechanischen Lastfall für einen/den zweiten Abschnitt des zu fertigenden Werkstücks unter Verwendung von Simulationsdaten zu simulieren, die dem Referenzbauteil zugeordnet sein können.

In einer Ausführungsform kann die Empfangseinheit dazu ausgebildet sein, die Bauteilbeschreibung über ein Kommunikationsnetz, insbesondere über das Internet, vorzugsweise unter Verwendung einer Anwendungsprogrammierschnittstelle, zu empfangen.

In einer Ausführungsform kann das Konstruktionssystem eine Herstellungsmaschine umfassen, die dazu ausgebildet sein kann, das zu fertigende Werkstück unter Verwendung des mindestens einen Herstellungsparameters herzustellen.

Weitere Ausführungsformen ergeben sich aus den Unteransprüchen. Es ist explizit vorgesehen, dass einzelne Aspekte, die im Zusammenhang mit den Verfahren beschrieben sind auch mit der Herstellungsmaschine kombiniert werden können.

Im Folgenden wird die Erfindung anhand von Ausführungsbeispielen näher erläutert. Dabei zeigen:
- Figur 1:: eine schematische Darstellung einer Spritzgussmaschine;
- Figur 2:: eine schematische Darstellung eines Werkzeugs;
- Figur 3:: eine schematische Darstellung eines Konstruktionssystems;
- Figur 4:: eine schematische Darstellung einer Bestimmungseinheit;
- Figur 5:: eine schematische Darstellung eines Werkstücks in einem Lastfall;
- Figur 6:: eine schematische Darstellung der Segmentierung eines Werkstücks;
- Figur 7:: eine schematische Darstellung des Aufbaus eines künstlichen neuronalen Netzes;
- Figur 8:: eine schematische Darstellung eines Konstruktionssystems in einem weiteren Ausführungsbeispiel;
- Figur 9:: ein Flussdiagramm für ein Verfahren zur Bestimmung mindestens eines Herstellungsparameters;
- Figur 10:: ein Flussdiagramm von Verfahrensschritten zur Segmentierung eines zu fertigenden Werkstücks;
- Figur 11:: ein Flussdiagramm für die Simulation eines Lastfalls
- Figur 12:: ein Flussdiagramm eines Herstellungsverfahrens.

Im Folgenden werden für gleiche oder gleichwirkende Teile dieselben Bezugsziffern verwendet.

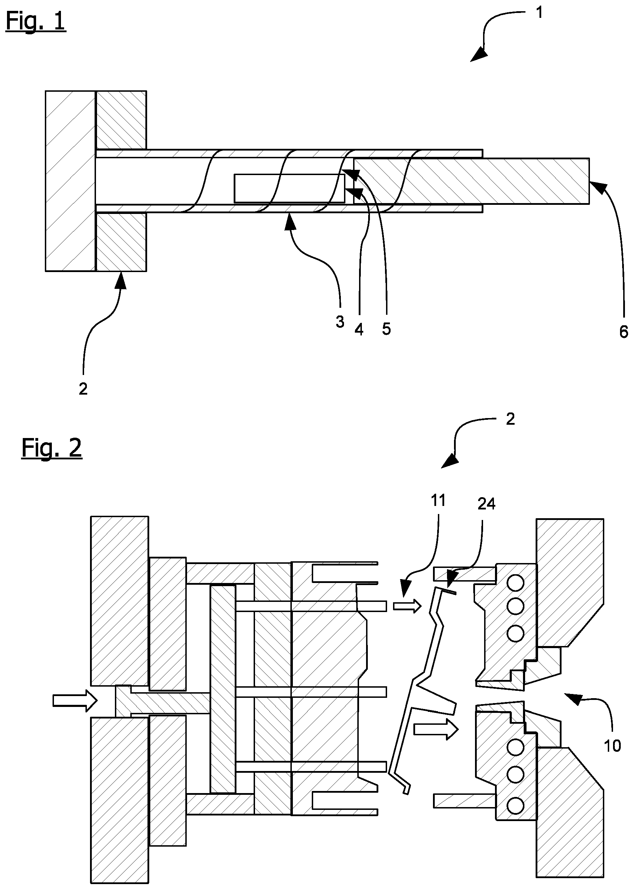

Die Figur 1 zeigt eine schematische Darstellung einer AMM (Amorphous-Metal)-Spritzgussanlage 1. Die Spritzgussanlage 1 umfasst eine Form im Werkzeug 2 und eine Schmelzkammer 3. Der Schmelzkammer 3 wird über einen Roboter ein massives Legierungssegment einer amorph erstarrenden Legierung (Rohling) 4 zugeführt und mittig in einer Induktionsspule 5 platziert. Der Rohling 4 wird innerhalb der Schmelzkammer 3 mittels eines Heizelements insbesondere eines Induktionsfeldes, welches durch die Induktionsspule 5 erzeugt wird, erhitzt. Bei dem Rohling 4 handelt es sich um ein massives Legierungssegment einer amorph erstarrenden Legierung. Das Legierungssegment 4 weist zum Beispiel einen bestimmten Anteil Palladium, Platin, Zirconium, Titan, Kupfer, Aluminium, Magnesium, Niobium, Silizium und/oder Yttrium auf.

Durch das Heizelement bzw. die Induktionsspule 5 wird der Rohling 4 zum Schmelzen gebracht, sodass er in schmelzflüssiger Form vorliegt. Vorzugsweise wird der Rohling 4 auf eine Temperatur von 1050 °C aufgeheizt. Durch einen Kolben 6 wird das schmelzflüssige Material in das Werkzeug 2 eingespritzt.

Figur 2 zeigt den schematischen Aufbau eines Spritzwerkzeuges 2. Mittels einer oder einer Vielzahl von Öffnungen 10, die in eine Formkammer 11 eines Werkzeuges 2 führen, wird die Formkammer 11 mit einer Schmelze gefüllt. Die Formkammer 11 ist als eine Negativform des herzustellenden Werkstücks 24 ausgelegt. In dem Ausführungsbeispiel der Figur 2 ist vorgesehen, dass eine Öffnung 10 dazu verwendet werden kann, flüssiges Material in die Formkammer 11 zu führen. Es kann vorteilhaft sein, mehrere Angüsse zur Füllung der Formkammer 11 zu nutzen, um eine gleichmäßige Temperaturverteilung zu erzielen als auch, um Verwirbelungen der Schmelze zu verringern. Eine gleichmäßige Temperaturverteilung und eine geringe Anzahl von Verwirbelungen führen zu einem besseren Kühlvorgang, zu einer homogenen Abkühlung und damit zu gleichmäßigen amorphen Materialeigenschaften.

Innerhalb der Formkammer 11 muss das flüssige Material schnell auskühlen, um eine Kristallisation zu verhindern. Das Auskühlen des flüssigen Materials hängt stark von der Geometrie des herzustellenden Bauteils bzw. Werkstücks 24 ab.

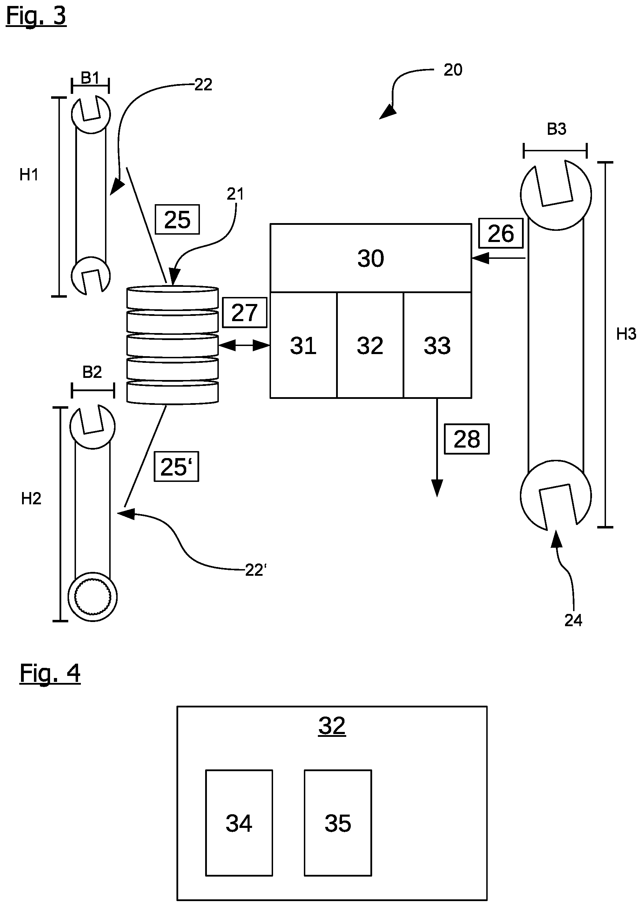

Figur 3 zeigt eine schematische Darstellung eines Konstruktionssystems 20. Das Konstruktionssystem 20 umfasst eine Datenbankeinheit 21, eine Empfangseinheit 30, eine Leseeinheit 31, eine Bestimmungseinheit 32 und eine Parameterbestimmungseinheit 33.

Die Empfangseinheit 30 ist dazu ausgebildet, eine Bauteilbeschreibung 26 eines zu fertigenden Werkstücks 24 zu empfangen. In dem Ausführungsbeispiel ist die Bauteilbeschreibung als CAD-Datei implementiert. Das zu fertigende Werkstück 24 ist im dem gezeigten Ausführungsbeispiel nur beispielhaft als ein Schraubenschlüssel ausgebildet. Zur Vereinfachung wird angenommen, dass die Bauteilbeschreibung 26 eine Parametrierung des Schraubenschlüssels angibt. So umfasst die Bauteilbeschreibung 26 einen Höhenparameter H3, der die Höhe bzw. die Länge des zu fertigenden Werkstücks 24 angibt. Darüber hinaus gibt die Bauteilbeschreibung 26 eine Breite B3 an, die Breite des zu fertigenden Werkstücks 24 angibt. Selbstverständlich sind weitere Parameter denkbar, die jedoch zur Vereinfachung weggelassen sind.

Die Empfangseinheit 30 ist in dem gezeigten Ausführungsbeispiel dazu ausgebildet, die Bauteilbeschreibung 26 über ein Kommunikationsnetzwerk zu empfangen. Dazu stellt die Empfangseinheit 30 eine Programmierschnittstelle, z.B. eine API (Application Programmable Interface) bereit, mittels derer Anwenderprogramme Daten an die Empfangseinheit 30 übertragen können.

Die Empfangseinheit 30 ist kommunikativ mit der Bestimmungseinheit 32 verbunden, sodass die Bauteilbeschreibung 26 der Bestimmungseinheit 32 durch die Empfangseinheit 30 bereitgestellt werden kann.

Die Datenbankeinheit 21 ist dazu ausgebildet, Bauteilbeschreibungen 25, 25' von einer Vielzahl von Referenzbauteilen 22, 22' zu speichern. Die Referenzbauteile 22, 22' können jeweils unterschiedlichen Bauteiltypen zugeordnet sein. So ist in der Figur 3 erkennbar, dass das Referenzbauteil 22 vom Typ "Schraubenschlüssel" ist und das Referenzbauteil 22' vom Typ "Schraub-Ringschlüssel". Die zugehörigen Bauteilbeschreibungen 25, 25' geben jeweils ebenfalls geometrische Parameter B1, B2, H1, H2 der zugehörigen Referenzbauteile 22, 22' an.

Darüber hinaus ist die Datenbankeinheit 21 dazu ausgebildet, den Referenzbauteilen 22, 22' zugeordnete Simulationsdaten 27 zu speichern. Die Simulationsdaten 27 umfassen Angaben hinsichtlich der Herstellung und/oder der Verwendung der Referenzbauteile 22, 22`. So umfassen die Simulationsdaten 27 in einem Ausführungsbeispiel Abkühlgeschwindigkeitsdaten für einzelne Abschnitte der Referenzbauteile bei der Herstellung mit einem ausgewählten Herstellungsverfahren und einer ausgewählten Legierung. Zusätzlich oder alternativ können die Simulationsdaten 27 aus den Abkühlgeschwindigkeiten abgeleitete Eigenschaften der Referenzbauteile 22, 22' angeben. Zum Beispiel geben die Simulationsdaten 27 an, welche Bauteilabschnitte der Referenzbauteile 22, 22' über amorphe Eigenschaften verfügen.

Die Bestimmungseinheit 32 ist dazu ausgebildet, unter Verwendung der Bauteilbeschreibung 26 des zu fertigenden Werkstücks 24 ein Referenzbauteil zu bestimmen. Dazu kann die Bestimmungseinheit 32 dazu ausgebildet sein, die Bauteilbeschreibung 26 zu segmentieren. Die Segmentierung zerlegt die Bauteilbeschreibung 26 in Bauteilabschnitte. Diese Bauteilabschnitte können zum Beispiel als geometrische Grundformen, wie Quader, Pyramiden oder Kugeln, ausgebildet sein.

Zusätzlich oder alternativ ist die Bestimmungseinheit 32 dazu ausgebildet, die Bauteilbeschreibung 26 in Bauteilabschnitte zu zerlegen, die jeweils einzelne Bauteile angeben. So kann ein komplexes Werkstück in Teilwerkstücke zerlegt werden, z.B. kann ein zusammengeschraubtes komplexes Werkstück in die Einzelwerkstücke und die Schrauben zerlegt werden.

Die Bestimmungseinheit 32 ist ferner dazu ausgebildet, unter Verwendung einer Mustererkennung entweder für das gesamte zu fertigende Werkstück 24 oder für Bauteilabschnitte des zu fertigenden Werkstücks 24 mindestens ein Referenzbauteil 22, 22' zu bestimmen. Dazu kann in einem Ausführungsbeispiel zunächst ein Typ des zu fertigenden Werkstücks 24 bestimmt werden. Zum Beispiel kann ein Klassifikator eingesetzt werden, um dem zu fertigenden Werkstück einen Bauteiltyp zuzuordnen. Basieren auf dem ermittelten Bauteiltyp kann die Leseeinheit 31 aus der Datenbankeinheit 21 jene Referenzbauteile 22, 22' auslesen, die demselben Bauteiltyp zugeordnet sind. Somit kann mittels des Bauteiltyps eine Vorauswahl getroffen werden.

Alternativ ist es auch möglich, dass die Leseeinheit 31 dazu ausgebildet ist, nacheinander Referenzbauteile 22, 22' aus der Datenbankeinheit 21 auszulesen, um so zu prüfen, ob ein Referenzbauteil 22, 22' eine hinreichende Ähnlichkeit mit dem zu fertigenden Werkstück 24 aufweist. Zum Feststellen der Ähnlichkeit kann ein Regressionssystem oder ein Klassifikator eingesetzt werden. Zum Beispiel kann ein Klassifikator eine binäre Ausgabe aufweisen, die ,1' ist, wenn eine hinreichende Ähnlichkeit vorliegt und ,0`, wenn keine hinreichende Ähnlichkeit vorliegt. Ein Regressionssystem kann einen Wert der Ähnlichkeit angeben, wobei ein Wert von '1' angeben kann, dass eine vollständige Identität vorliegt und ein Wert '0' angeben kann, dass keine Ähnlichkeit zwischen einem Referenzbauteil 22, 22' und dem zu fertigenden Werkstück 24 besteht. Für das Bestimmen der Ähnlichkeit können auch die in den Bauteilbeschreibungen 26, 25, 25' gespeicherten Parameter herangezogen werden.

In dem gezeigten Ausführungsbeispiel der Figur 3 wird durch die Bestimmungseinheit 32 bestimmt, dass das durch die Bauteilbeschreibung 26 angegebene Werkstück 24 eine hohe Ähnlichkeit zu dem Referenzbauteil 22 aufweist. Die Leseeinheit 31 ist dazu ausgebildet, Simulationsdaten 27 des Referenzbauteils 22, 22' auszulesen, dass die größte Ähnlichkeit zu dem zu fertigenden Bauteil 24 aufweist.

Wie ausgeführt geben die Simulationsdaten 27 zum Beispiel die Abkühltemperatur des Referenzbauteils 22 bei der Fertigung an. Somit kann festgestellt werden, ob das Referenzbauteil 22 über amorphe Eigenschaften verfügt.

Die Parameterbestimmungseinheit 33 ist nun dazu ausgebildet, unter Verwendung der Simulationsdaten 27, mindestens einen Herstellungsparameter 28 für das zu fertigende Werkstück 24 anzugeben. Dabei ist die Parameterbestimmungseinheit 33 dazu ausgebildet, z.B. bestimmte Daten der Simulationsdaten 27 als Herstellungsparameter 28 für das zu fertigende Werkstück 24 heranzuziehen. Wenn z.B. die Simulationsdaten 27 angeben, dass das zugehörige Referenzbauteil 22 über amorphe Eigenschaften verfügt, so kann die Parameterbestimmungseinheit 33 die beim Referenzbauteil 22 simulierte Legierung und das simulierte Herstellungsverfahren als Herstellungsparameter 28 für das zu fertigende Werkstück angeben. Somit kann ohne eine erneute Simulation sichergestellt werden, dass auch das zu fertigende Werkstücks 24 über amorphe Eigenschaften verfügen wird.

Figur 4 zeigt eine schematische Ansicht einer Bestimmungseinheit 32. Die Bestimmungseinheit 32 in dem gezeigten Ausführungsbeispiel weist eine Klassifikationseinheit 34 auf, die dazu ausgebildet ist, zu bestimmen, ob ein Referenzbauteil 22, 22' geeignet ist, als Grundlage für die Bestimmung des mindestens einen Herstellungsparameters 28 für das zu fertigende Werkstück 24 zu dienen. Wie bereits obenstehend zur Figur 3 ausgeführt, ist die Klassifikationseinheit 34 dazu ausgebildet, eine Ähnlichkeit von dem zu fertigenden Werkstück 24 und den in der Datenbankeinheit 21 gespeicherten Referenzbauteilen 22, 22' zu bestimmen.

Darüber hinaus weist die Bestimmungseinheit 32 eine Simulationseinheit 35 auf, die dazu ausgebildet ist, das Verhalten des zu fertigenden Werkstücks 24 oder Bauteilabschnitten des zu fertigenden Werkstücks 24 zu simulieren. Die Simulationseinheit 35 ist z.B. dazu ausgebildet, für ein Herstellungsverfahren und eine Legierung das Temperaturverhalten bei der Herstellung zu simulieren. Damit kann festgestellt werden, ob mit der ausgewählten Legierung und dem Herstellungsverfahren für das zu fertigende Werkstück amorphe Eigenschaften erreicht werden, d.h. ob die Abkühlgeschwindigkeit größer einer kritischen Abkühlgeschwindigkeit ist.

Darüber hinaus ist die die Simulationseinheit 35 zur Simulation von Lastfällen des zu fertigenden Werkstücks 24 ausgebildet.

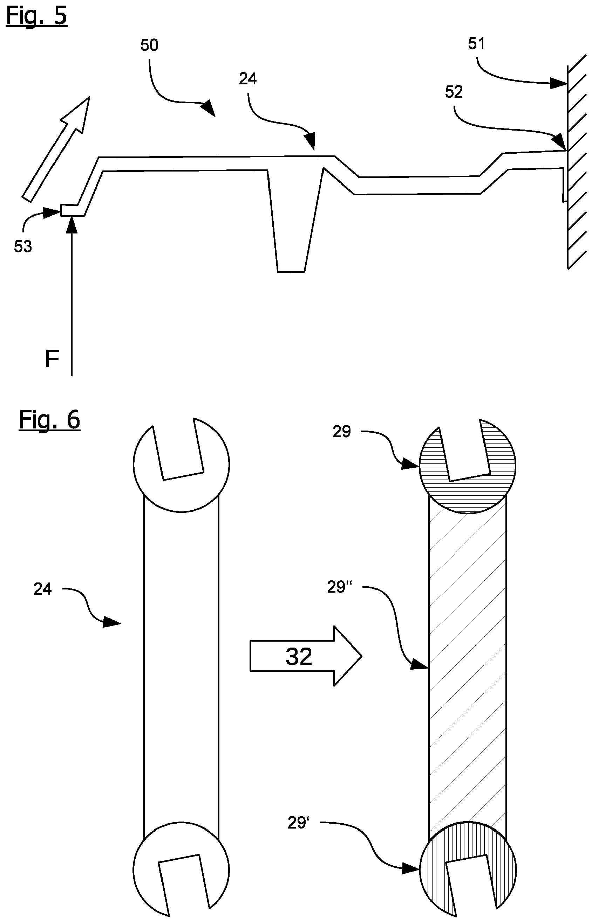

So zeigt Figur 5 eine schematische Darstellung eines Lastfalls 50. Bei dem Lastfall 50 ist ein Werkstück 24 an einem distalen Ende 52 an einer Wand 51 befestigt. An einem proximalen Ende 53 ist das Werkstück 24 frei. Nun wird durch den Lastfall 50 das Anlegen einer Kraft F senkrecht von unten an dem proximalen Ende 53 des Werkstücks 24 angeben. Durch das Anlegen der Kraft F kommt es zu einer Verformung des Werkstücks 24. Dabei wirkt ein Moment, d.h. ein Biegemoment, auf das Werkstück 24, sodass es zu einer Verformung kommt. Ist die Kraft F zu groß, so kommt es entweder zu einer irreversiblen Verbiegung oder sogar zum Bruch des Werkstücks 24.

Die Simulationseinheit 35 ist nunmehr dazu ausgebildet, das Verhalten des Werkstücks 24 beim Anlegen der Kraft F zu simulieren. Zugehörige Simulationsdaten 27 geben somit an, wie stark eine Verbiegung des Werkstücks 24 ist und/oder ob es zum Bruch kommt. Dabei können die Simulationsdaten 27 auch einen zeitlichen Verlauf angeben, d.h. den Zustand des Werkstücks 24 zu unterschiedlichen Zeitpunkten nach dem Anlegen der Kraft F an dem proximalen Ende 53.

Die Figuren 6 bis 8 zeigen ein weiteres Ausführungsbeispiel des Konstruktionssystems 20.

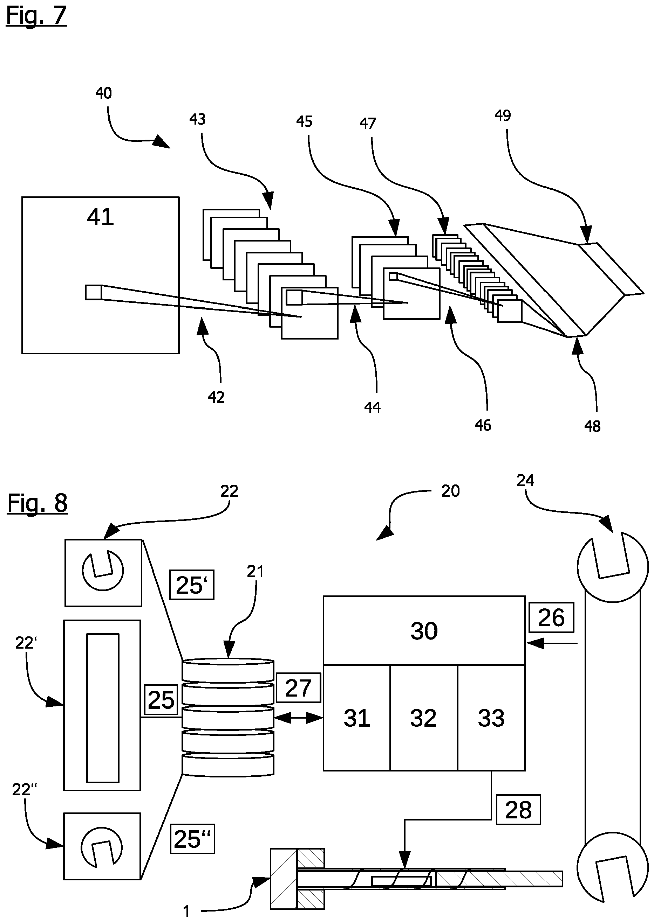

Figur 6 illustriert das Segmentieren eines Werkstücks 24 in Bauteilabschnitte 29, 29`, 29". Die Bestimmungseinheit 32 ist wie beschrieben dazu ausgebildet, ein zu fertigendes Werkstück 24 in einzelne Bauteilabschnitte 29, 29`, 29" zu zerlegen. Dazu kann die Bestimmungseinheit 32 als eine künstliches neuronales Netzwerk 40, vgl. Figur 7, implementiert sein. In dem Ausführungsbeispiel der Figur 6 handelt es sich bei dem zu fertigenden Werkstück 24 um einen Schraubenschlüssel. Dabei wird das zu fertigende Werkstück 24 in drei Bauteilabschnitte 29, 29', 29" segmentiert. Dabei wird ein erster Bauteilabschnitt 29 durch ein erstes Ende, welches parallel zueinander angeordnete erste Backen umfasst, gebildet. Ein zweiter Bauteilabschnitt 29` wird durch das zweite Ende des Schraubenschlüssels 24 mit zwei zueinander parallel angeordneten Backen gebildet, welches horizontal gespiegelt zu dem ersten Bauteilabschnitt 29 angeordnet ist. Ein dritter Bauteilabschnitt 29" ist zwischen dem ersten und dem zweiten Bauteilabschnitt 29, 29' angeordnet und umfasst einen Griffbereich des Schraubenschlüssels 24.

Zum Segmentieren des zu fertigenden Werkstücks 24 kann die Bestimmungseinheit 32 die Bauteilbeschreibung 26, die das zu fertigende Werkstücks 24 angibt, verarbeiten. Zur Segmentierung kann Beispielsweise ein neuronales Netz eingesetzt werden, das die einzelnen Bauteilabschnitte einer Klasse von Objekten zuordnet. Dazu kann zum Beispiel das künstliche neuronale Netz der Figur 6 eingesetzt werden.

Figur 7 zeigt ein künstliches neuronales Netz, was im Falle der Figur 6 als ein sogenanntes Convolutional Neural Network 40 (CNN 40) ausgebildet ist. Das neuronale Netz 40 der Figur 7 kann als Klassifikator oder auch als Regressor ausgebildet sein.

Eingangsdaten 41 für das neuronale Netz 40 können ein Tensor, d. h. eine dreidimensionale Matrix, sein, die über eine Vielzahl von Datenelementen verfügt. Jedes Datenelement kann zu einem Volumenelement korrespondieren. Jedes Datenelement kann als ein Tupel ausgebildet sein, das angibt, ob an dem Ort des korrespondierenden Volumenelements Material vorhanden ist, welches Material verwendet wird und/oder welche Ausgangstemperatur an dem Ort des korrespondierenden Volumenelements vorherrscht. Die Bauteilbeschreibung 26 des zu fertigenden Werkstücks 24 kann z.B. als dreidimensionaler Tensor 41 mit Volumenelemente ausgebildet sein. Somit kann die Bauteilbeschreibung 26 die Eingangsdaten 41 des neuronalen Netzes 40 angeben.

Es ist jedoch auch denkbar, dass die Bauteilbeschreibung 26 als ein CAD-Modell ausgebildet ist, welches Grundformen, wie Kurven, Quader, Kugel und weitere, parametriert. Somit können auch die Elemente des CAD-Modells die Eingangsdaten 41 bilden. Auch in diesem Fall, wenn also die Eingangsdaten 41 durch die Elemente eines CAD-Modells angegeben werden, können die Elemente des CAD-Modell als ein Tensor ausgedrückt werden, um die Eingangsdaten 41 zu bilden.

Ein CCN 40 ist über eine Vielzahl von Parametern definiert. Ein Kernel scannt sequenziell die Eingangsdaten 41 in einem ersten Schritt. Die Schrittweite des Kernels, der sogenannte stride, gibt an, um wie viele Volumenelemente der Kernel bei jedem Scan verschoben werden muss. Die Größe des Kernels kann ebenfalls festgelegt werden. Damit definieren die Schrittweite und die Größe des Kernels die sogenannten Merkmalsdetektoren 43, die durch eine erste Faltung 42 erzeugt werden. Jeder Merkmalsdetektor 43 detektiert in den Eingangsdaten 41 ein bestimmtes Merkmal. Zum Beispiel kann ein Merkmalsdetektor 43 angeben, ob an einer bestimmten Stelle Material vorhanden ist oder nicht. Insgesamt wird eine Vielzahl von Merkmalsdetektoren 43 erzeugt, die nicht vorher manuell definiert worden sind.

Nach dem gleichen Prinzip wird in einer zweiten Faltung 44 ein neuer Satz von Merkmalsgeneratoren 45 aus den ersten Merkmalsdetektoren 43 erzeugt, wobei bei der zweiten Faltung die Anzahl der Merkmalsgeneratoren gegenüber der ersten Faltung reduziert ist. Ein solcher Schritt wird als pooling oder subsampling bezeichnet.

Bei einer dritten Faltung 46 wird ein dritter Satz von Merkmalsgeneratoren 47 erzeugt. Im letzten Schritt wird mittels einer sogenannten soft-max Schicht jedem Volumenelement eine Klasse zugeordnet. Das bedeutet, dass aus der Ausgabe erkennbar ist, zu welcher Klasse von Objekten ein Volumenelement gehört. Darauf ergibt sich, dass die Segmentierung eines zu fertigenden Werkstücks 24 und die Zuordnung des Werkstücks 24 oder einzelner Bauteilabschnitte 29, 29`, 29" zu Referenzbauteilen 22, 22', 22" in einem einzigen Schritt, z. B. mittels des neuronalen Netzwerks der Figur 6, ausgeführt werden kann.

Jede Schicht des CCN 40 besteht aus einer großen Anzahl von Neuronen, d. h. von Aktivierungsfunktionen, denen Gewichte zugeordnet sind. Abhängig von dem Gewicht und einem Eingabewert wird die Ausgabe des Neurons aktiviert oder nicht aktiviert. Mögliche Aktivierungsfunktionen umfassen zum Beispiel logit, arc tan, Gausssche Funktionen. Das Training des CCN 40 wird unter Verwendung des Backpropagation Algorithmus ausgeführt, wobei die Werte der Gewichte bestimmt werden.

Für CNN gibt es eine Reihe unterschiedlicher Modelle, wie zum Beispiel VGG-net, RES-net, general adversiral networks oder google LeNet. Eine jeder dieser Implementierungen kann verwendet werden oder es ist eine andere Implementierung möglich. Das Training der neuronalen Netze kann effizient ausgeführt werden, da eine Vielzahl der Operation parallelisiert ausgeführt werden kann. Die Inferenz, d. h. das Abfragen von Werten für bestimmte Bauteilbeschreibung, ist sehr effizient ausführbar.

Die Figur 8 zeigt ein Ausführungsbeispiel eines Konstruktionssystems 20, bei dem ein zu fertigendes Werkstücks 24 in eine Vielzahl von Bauteilabschnitten 29, 29`, 29" segmentiert und diese einzelnen Referenzbauteilen 22, 22', 22" zugeordnet werden können.

Im Unterschied zu dem Konstruktionssystem 20 der Figur 1 wird bei dem Konstruktionssystem 20 der Figur 8 ein zu fertigendes Bauteil 24 bzw. die zugehörige Bauteilbeschreibung 26 von einer Empfangseinheit 30 empfangen und mittels der Bestimmungseinheit 32 in einzelne Bauteilabschnitte 29, 29', 29" segmentiert.

Die Datenbankeinheit 21 speichert zumindest drei Referenzbauteile 22, 22`, 22", die den Bauteilabschnitten 29, 29`, 29" entsprechen. Die Bestimmungseinheit 32 ist dazu ausgebildet, zu die den Bauteilabschnitten 29, 29`, 29" entsprechenden Referenzbauteile 22, 22`, 22" zu identifizieren.

Anschließend liest die Leseeinheit 31 Simulationsdaten 25, 25`, 25" für die identifizierten Referenzbauteile 22, 22`, 22" aus. Dabei bestimmt die Parameterbestimmungseinheit 33 basierend auf den ausgelesenen Simulationsdaten 25, 25`, 25" mindestens einen Herstellungsparameter 28 und gibt diesen an eine Spritzgussmaschine 1 ab. Alternativ kann mit dem Herstellungsparameter 28 auch in einem vorgelagerten Schritt eine Maschine zur Fertigung des zu fertigenden Werkstücks 24 ausgewählt werden.

Die Parameterbestimmungseinheit 33 ist in dem gezeigten Ausführungsbeispiel dazu ausgebildet, die Simulationsdaten 25, 25`, 25" miteinander zu kombinieren, um den mindestens einen Herstellungsparameter 28 zu bestimmen. Dabei kann die Parameterbestimmungseinheit 33 zum Beispiel vorhandene Daten dazu verwenden einen Lastfall für das zu fertigende Werkstück zu simulieren, um basierend auf dem simulierten Verhalten des zu fertigenden Werkstücks 24 bei einer vorgegebenen Legierung und/oder eines vorgegebenen Herstellungsverfahrens, zu bestimmen, ob das zu fertigende Werkstück 24 dem Lastfall standhält.

In einem Ausführungsbeispiel kann das Abkühlverhalten der Referenzbauteile 22, 22`, 22", die durch die Simulationsdaten 25, 25`, 25" angegeben wird, verwendet werden, um festzustellen, ob das herzustellende Werkstück 24 bei einer verwendeten Legierung und einem Herstellungsverfahren über amorphe Eigenschaften verfügen wird. In diesem Fall können die Simulationsdaten der Simulationsdaten 25, 25`, 25" als Eingangsdaten einer Simulation des Abkühlvorgangs des zu fertigenden Werkstücks 24 verwendet werden.

Die Parameterbestimmungseinrichtung 33 ist dazu ausgebildet, basierend auf den Simulationsdaten 25, 25`, 25" und/oder einer Simulation des zu fertigenden Werkstücks 24, zu entscheiden, ob das Ergebnis einer Fertigung mit den simulierten Herstellungsparametern einem Anforderungsprofil entspricht. Entspricht das Ergebnis der Fertigung nicht dem Anforderungsprofil, so wird die Simulation des zu fertigenden Werkstücks 24 solange mit jeweils wechselnden Parametern ausgeführt, bis das Anforderungsprofil erfüllt wird. Erst dann werden die simulierten Parameter als mindestens ein Herstellungsparameter 28 ausgegeben.

In diesem Zusammenhang kann die Parameterbestimmungseinheit 33 auch dazu ausgebildet sein, eine Optimierung der Herstellungsparameter hinsichtlich eines Zielwerts unter Verwendung einer Kostenfunktion auszuführen. So kann das Abkühlverhalten als Kostenfunktion herangezogen werden, die minimiert werden soll, d.h. die Abkühlgeschwindigkeit soll maximiert werden. Das Überschreiten einer kritischen Abkühlgeschwindigkeit, die das Erreichen von amorphen Eigenschaften angibt, kann dabei als Abbruchkriterium verwendet werden.

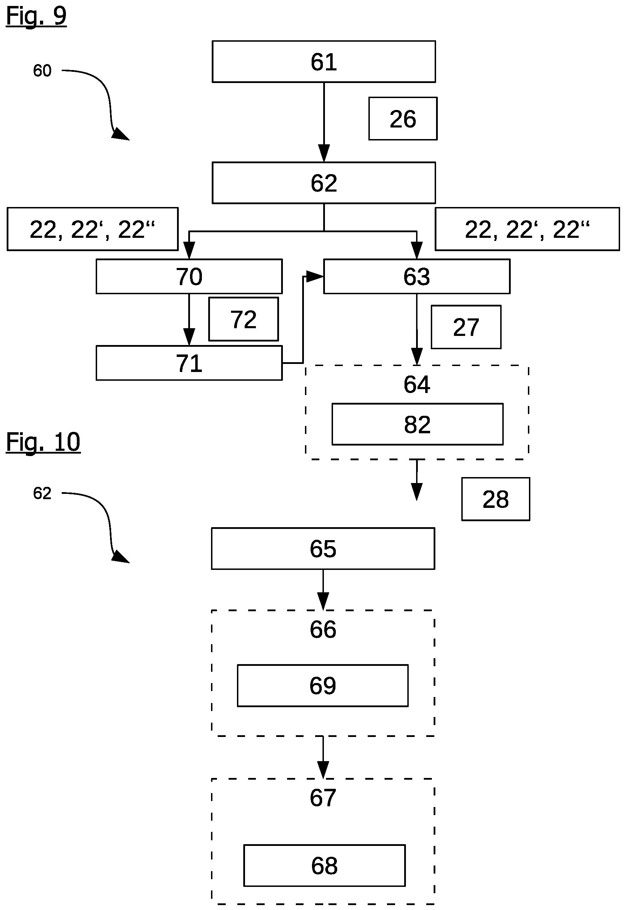

Figur 9 zeigt ein Flussdiagramm für ein Verfahren 60 zum Bestimmen mindestens eines Herstellungsparameters 28, welches durch das Konstruktionssystem 20 implementiert wird. In einem Empfangsschritt 61 wird eine Bauteilbeschreibung 26 empfangen, die ein zu fertigendes Werkstück 24 angibt. In einem Bestimmungsschritt 62 wird ein Referenzbauteil 22, 22`, 22" für das zu fertigende Werkstück bestimmt, wie es auch schon bereits im Zusammenhang mit den Figuren 3 und 8 erläutert wurde. Für das Referenzbauteil 22, 22`, 22" kann anschließend eine Abkühlgeschwindigkeit simuliert 70 werden. Bei dem Simulieren 70 werden Referenz-Simulationsdaten 72 erzeugt, die in einem anschließenden Speicherschritt 71 in einer Datenbankeinheit 21 gespeichert werden.

Die Referenz-Simulationsdaten 72 und zu dem bestimmten Referenz-Bauteil 22, 22', 22"gespeicherte Simulationsdaten 27 werden anschließend in einem Ausleseschritt 63 aus der Datenbankeinheit 21 ausgelesen. Unter Verwendung der Simulationsdaten 27, bzw. der Referenz-Simulationsdaten 72, die Teile der Simulationsdaten 27 sein können, wir nunmehr in einem Bestimmenschritt 64 mindestens ein Herstellungsparameter 28 für das zu fertigende Bauteil nach den bereits vorstehend beschriebenen Prinzipien bestimmt. Dabei umfasst das Bestimmen 64 des mindestens einen Herstellungsparameters 28 in der gezeigten Ausführungsform ein Auswählen 82 einer Herstellungsmaschine 1, mit der das zu fertigende Werkstück 24 hergestellt werden soll.

Figur 10 zeigt ein Flussdiagram der Verwendung einer Bestimmungseinheit 32. In einem ersten Trainingsschritt 65 wird eine Klassifikations- und/oder Regressionseinheit 34 trainiert bzw. angelernt. Dazu werden in dem gezeigten Ausführungsbeispiel Verfahren des überwachten Lernens (superbised learning) angewendet. Die trainierte Klassifikations- oder Regressionseinheit 34 wird in einem Segmentierungsschritt 66 verwendet, um das zu fertigende Werkstück 24 zu segmentieren. Dabei umfasst die Segmentierung 66 einen Aufteilenschritt 69, bei dem das zu fertigende Werkstück 24 in Bauteilabschnitt 29, 29`, 29" aufgeteilt wird (vgl. Figur 6).

Anschließend wird in einem Mustererkennungsschritt 67 mittels derselben oder einer weiteren Klassifikations- bzw. Regressionseinheit 34 in einem Mustererkennungsschritt 67 geprüft, welches in einer Datenbankeinheit 21 gespeicherte Referenzbauteil 21 ,21`, 21" eine hinreichende Ähnlichkeit mit dem zu fertigenden Werkstück 24 aufweist. Dabei wird in einem Klassifikationsschritt 68 jedem Bauteilabschnitt 29, 29', 29" ein Referenzbauteil 22, 22`, 22" zugeordnet.

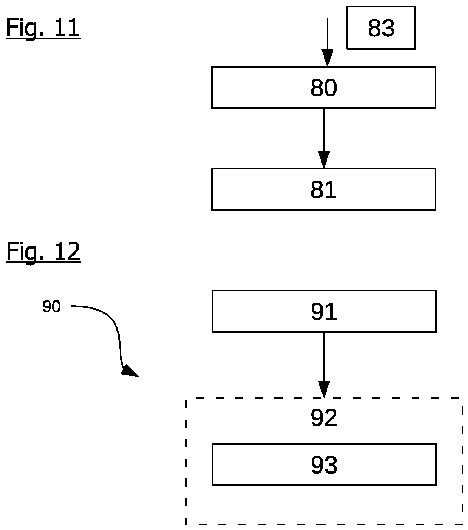

Figur 11 illustriert wie in einem Bestimmungsschritt 80 mindestens eine mechanische Eigenschaft des zu fertigenden Werkstücks 24 bestimmt wird. Dabei wir das Bestimmen 80 unter Verwendung einer simulierten Abkühlgeschwindigkeit 83 ausgeführt. Es kann zum Beispiel unter Verwendung der simulierten Abkühlgeschwindigkeit 83 ein Amorphizitätswert bestimmt werden, der den Grad der Amorphizität angeben kann.

Basierend auf der mindestens einen mechanischen Eigenschaft wird nunmehr im nachfolgenden Simulationsschritt 81 ein Lastfall 50 simuliert, wie es im Zusammenhang mit Figur 5 näher erläutert ist. Dabei kann geprüft werden, ob das zu fertigenden Werkstücks 24 mit den simulierten Parametern dem Lastfall 50 standhalten würde.

Figur 12 zeigt ein Flussdiagramm eines Herstellungsverfahrens 90. In einem ersten Schritt 91 wird für ein zu fertigendes Werkstück 24 mindestens ein Herstellungsparameter 28 bestimmt, wie es vorstehend eingehend beschrieben ist. Nachfolgend kann unter Verwendung des bestimmten mindestens einen Herstellungsparameters 28 das zu fertigende Werkstück 24 mittels einer Herstellungsmaschine 1 hergestellt werden.

Es wird explizit darauf hingewiesen, dass sämtliche beschriebene Aspekte miteinander beliebig kombinierbar sind. Insbesondere die hinsichtlich Vorrichtungen beschriebenen Aspekte sind ebenfalls für die entsprechenden Verfahren mit offenbart und umgekehrt.

### Bezugszeichenliste

- 1: Spritzgussmaschine
- 2: Werkzeug
- 3: Schmelzzylinder
- 4: Legierungselement/Rohling
- 5: Heizelement
- 6: Stempel
- 10: Einlassöffnung
- 11: Formkammer
- 20: Konstruktionssystem
- 21: Datenbankeinheit
- 22, 22`, 22": Referenzbauteil
- 24: Werkstück
- 25, 25', 25,": Bauteilbeschreibung eines Referenzwerkstücks
- 26: Bauteilbeschreibung des zu fertigenden Werkstücks
- 27: Simulationsdaten
- 29, 29', 29": Bauteilabschnitte
- 28: Herstellungsparameter
- 30: Empfangseinheit
- 31: Leseeinheit
- 32: Bestimmungseinheit
- 33: Parameterbestimmungseinheit
- 34: Klassifikationseinheit
- 35: Simulationseinheit
- 40: künstliches neuronales Netz
- 41: Eingangsdaten/Tensor
- 42: erste Faltung
- 43: Merkmalsdetektor
- 44: Subsampling
- 45: zweite Merkmalsdetektoren
- 46: zweite Faltung
- 47: dritte Merkmalsdetektoren
- 48: feedforward-Schicht
- 49: Ausgabeschicht
- 50: Lastfall
- 51: Wand
- 52: distales Ende
- 53: proximales Ende
- 60: Verfahren
- 61: Empfangsschritt
- 62: Bestimmungsschritt
- 63: Ausleseschritt
- 64: Bestimmungsschritt eines Herstellungsparameters
- 65: Training
- 66: Segmentierung
- 67: Mustererkennung
- 68: Klassifizieren
- 69: Aufteilen
- 70: Simulieren einer Abkühlgeschwindigkeit
- 71: Speichern
- 72: Referenz-Sim ulationsdaten
- 80: Bestimmenschritt
- 81: Simulieren eines mechanischen Lastfalls
- 82: Auswählen
- 83: simulierte Abkühlgeschwindigkeit
- 90: Herstellungsverfahren
- 91: Bestimmen mindestens eines Herstellungsparameters
- 92: Herstellen
- 93: Auswählen einer Herstellungsmaschine
- F: Kraft
- B1, B2, B3: Breite
- H1, H2, H3: Höhe

## Patentansprüche

1. Computer-implementiertes Verfahren (60) zur Bestimmung mindestens eines Herstellungsparameters (28) eines zu fertigenden Werkstücks (24) mit amorphen Eigenschaften, die folgenden Schritte aufweisend:
- Simulieren (70) einer Abkühlgeschwindigkeit eines Referenzwerkstücks (22, 22`, 22") während der Fertigung für mindestens eine vorbestimmte Legierung und mindestens ein vorbestimmtes Herstellungsverfahren unter Berücksichtigung mindestens eines Herstellungsverfahrens und unter Berücksichtigung von Parametern des Herstellungsverfahrens;
- Speichern (71) von Referenz-Simulationsdaten (72), die die simulierte Abkühlgeschwindigkeit geben;
- Empfangen (61) einer Bauteilbeschreibung (26), die ein zu fertigendes Werkstück (24) angibt, wobei die Bauteilbeschreibung (26) durch eine Datenstruktur angegeben ist und wobei die Bauteilbeschreibung (26) eine Geometrie des zu fertigenden Werkstücks und eine Legierung angibt;
- Bestimmen (62) eines Referenzbauteils (22, 22', 22") für zumindest einen Teil der Bauteilbeschreibung (26), wobei das Bestimmen unter Verwendung einer Mustererkennung (67) ausgeführt wird, wobei das Bestimmen (62) des Referenzbauteils (22, 22', 22") ein Segmentieren (66) der Bauteilbeschreibung (26) in eine Vielzahl von Bauteilabschnitten (29, 29', 29") umfasst, wobei die Mustererkennung (67) für mindestens einen Bauteilabschnitt (29, 29', 29") ausgeführt wird;
- Auslesen (63) von ersten Simulationsdaten (27), die mindestens eine Eigenschaft des Referenzbauteils (22, 22', 22") angeben, wobei die mindestens eine Eigenschaft die simulierte Abkühlgeschwindigkeit des Referenzwerkstücks (22, 22', 22") angibt, wobei die gespeicherten Referenz-Simulationsdaten (72) als erste Simulationsdaten (27) ausgelesen werden;
- Bestimmen (64) mindestens eines Herstellungsparameters (28) zur Fertigung des Werkstücks (24) unter Verwendung der ersten Simulationsdaten (27), also auch unter Verwendung der Parameter des Herstellungsverfahrens und der simulierten Abkühlgeschwindigkeit des Referenzbauteils (22, 22`, 22"), derart, dass das Werkstück (24) amorphe Eigenschaften aufweist.

2. Verfahren (60) nach Anspruch 1,
**dadurch gekennzeichnet, dass**
die Segmentierung (66) ein Aufteilen (69) einer durch die Bauteilbeschreibung (26) angegebenen Bauteilgeometrie unter Verwendung von Grundformen und/oder Verbindungsstellen umfasst.

3. Verfahren (60) nach einem der vorhergehenden Ansprüche,
**dadurch gekennzeichnet, dass**
das Bestimmen (62) des Referenzbauteils (22, 22', 22") ein Laden eines Referenzdatensatzes umfasst, insbesondere aus einer Datenbankeinheit (21), wobei der Referenzdatensatz eine Vielzahl von Referenzbauteilen (22, 22', 22") angibt und wobei das Bestimmen (62) ein Auswählen des Referenzbauteils (22, 22', 22") aus dem Referenzdatensatz unter Verwendung der Mustererkennung (67) umfasst.

4. Verfahren (60) nach einem der vorhergehenden Ansprüche,
**dadurch gekennzeichnet, dass**
die Mustererkennung (67) ein Klassifizieren (68), insbesondere unter Verwendung eines künstlichen neuronalen Netzes, umfasst, wobei das Klassifizieren (68) Bauteilabschnitten (29, 29', 29"), insbesondere Pixeln, Voxeln, Volumenelementen und/oder Teilabschnitten der Bauteilgeometrie, ein Referenzbauteil (22, 22'), insbesondere eines/des Referenzdatensatzes, zuordnet.

5. Verfahren (60) nach einem der vorhergehenden Ansprüche,
**dadurch gekennzeichnet, dass**
die ersten Simulationsdaten (27) eine Abkühlgeschwindigkeit des Referenzbauteils (22, 22', 22") für eine vorbestimmte Legierung und ein vorbestimmtes Herstellungsverfahren angeben.

6. Verfahren (60) nach einem der vorhergehenden Ansprüche,
**dadurch gekennzeichnet, dass**
die ersten Simulationsdaten (27) mechanische Eigenschaften des Referenzbauteils (22, 22', 22") für eine vorbestimmte Legierung, ein vorbestimmtes Herstellungsverfahren und/oder eine Abkühlgeschwindigkeit angeben.

7. Verfahren (60) nach einem der vorhergehenden Ansprüche,
**dadurch gekennzeichnet, dass**
das Simulieren (70) der Abkühlgeschwindigkeit des Referenzwerkstücks (22, 22', 22") während der Fertigung für eine Vielzahl von vorbestimmten Legierungen und für eine Vielzahl von vorbestimmten Herstellungsverfahren ausgeführt wird, vorzugsweise Simulieren (70) der Abkühlgeschwindigkeit des Referenzwerkstücks (22, 22', 22") nach einem Einspritzvorgang bei einem Spritzgussverfahren;
und wobei das Speichern (71) der Referenz-Simulationsdaten (72), ein Speichern in eine Datenbankeinheit (21) umfasst.

8. Verfahren (60) nach einem der vorhergehenden Ansprüche, insbesondere nach Anspruch 7,
**gekennzeichnet durch**
Bestimmen (80) mindestens einer mechanischen Eigenschaft des zu fertigenden Werkstücks (24) unter Verwendung einer simulierten Abkühlgeschwindigkeit des Referenzbauteils (22, 22', 22"), wobei das Bestimmen (64) des mindestens einen Herstellungsparameters (28) auch unter Verwendung der bestimmten mindestens einen mechanischen Eigenschaft ausgeführt wird.

9. Verfahren nach einem der vorhergehenden Ansprüche,
**dadurch gekennzeichnet, dass**
das Simulieren (70) der Abkühlgeschwindigkeit unter Berücksichtigung von Parametern eines Herstellungsverfahrens, z.B. einer Stempelgeschwindigkeit, einer Ausgangstemperatur und/oder einer Formgeometrie ausgeführt wird.

10. Verfahren (60) nach einem der vorhergehenden Ansprüche,
**dadurch gekennzeichnet, dass**
eine/die Simulation (70, 81) einer/der Abkühlgeschwindigkeit und/oder eines/des mechanischen Lastfalls nur dann ausgeführt wird, wenn die gespeicherten ersten Simulationsdaten (27) für ein Referenzbauteil (22, 22') keine Abkühlgeschwindigkeit bzw. keine Ergebnisdaten für einen identischen Lastfall angeben.

11. Herstellungsverfahren (90) zur Herstellung eines Werkstücks, umfassend die folgenden Schritte:
- Bestimmen (91) mindestens eines Herstellungsparameters (28) durch ein Verfahren nach einem der vorhergehenden Ansprüche,
- Herstellen (92) des Werkstücks unter Verwendung des mindestens einen Herstellungsparameters (28).

12. Computerlesbares-Speichermedium, welches Instruktionen enthält, die mindestens einen Prozessor dazu veranlassen, ein Verfahren nach einem der vorhergehenden Ansprüche zu implementieren, wenn die Instruktionen durch den mindestens einen Prozessor ausgeführt werden.

13. Konstruktionssystem (20), Folgendes aufweisend:
- eine Empfangseinheit (30), die dazu ausgebildet ist, eine Bauteilbeschreibung (26), die ein zu fertigendes Werkstück (24) angibt, zu empfangen, wobei die Bauteilbeschreibung (26) durch eine Datenstruktur angegeben ist und wobei die Bauteilbeschreibung (26) eine Geometrie des zu fertigenden Werkstücks und eine Legierung angibt;
- eine Bestimmungseinheit (32), die dazu ausgebildet ist, für zumindest einen Teil der Bauteilbeschreibung (26) ein Referenzbauteil (22, 22') zu bestimmen, wobei die Bestimmungseinheit (32) dazu ausgebildet ist, die Bestimmung unter Verwendung einer Mustererkennung auszuführen, wobei die Bestimmungseinheit ferner dazu ausgebildet ist, ein Segmentieren der Bauteilbeschreibung in eine Vielzahl von Bauteilabschnitten auszuführen, wobei die Bestimmungseinheit dazu ausgebildet ist, die Mustererkennung für mindestens einen Bauteilabschnitt auszuführen, wobei die Bestimmungseinheit eine Simulationseinheit aufweist, die dazu ausgebildet ist, eine Abkühlgeschwindigkeit eines Referenzbauteils während der Fertigung für mindestens eine vorbestimmte Legierung und für mindestens ein vorbestimmtes Herstellungsverfahren unter Berücksichtigung mindestens eines Herstellungsverfahrens und unter Berücksichtigung von Parametern des Herstellungsverfahrens, zu simulieren;
- eine Datenbankeinheit (21), die dazu ausgebildet ist, Referenz-Simulationsdaten zu speichern, die die simulierte Abkühlgeschwindigkeit angeben;
- eine Leseeinheit (31), die dazu ausgebildet ist, die gespeicherten Referenz-Simulationsdaten als erste Simulationsdaten (27) aus der Datenbankeinheit auszulesen;
- eine Parameterbestimmungseinheit (33), die dazu ausgebildet ist, mindestens einen Herstellungsparameter (28) zur Fertigung des Werkstücks (24) unter Verwendung der ersten Simulationsdaten (27) zu bestimmen, auch unter Verwendung der Parameter des Herstellungsverfahrens und der simulierten Abkühlgeschwindigkeit des Referenzbauteils (22, 22`, 22"), derart, dass das Werkstück (24) amorphe Eigenschaften aufweist.

14. Konstruktionssystem (20) nach Anspruch 13,
**gekennzeichnet durch**
eine Herstellungsmaschine (1), die dazu ausgebildet ist, das zu fertigende Werkstück (24) unter Verwendung des mindestens einen Herstellungsparameters (28) herzustellen.

## Claims

1. A computer-implemented method (60) for determining at least one production parameter (28) of a workpiece (24) to be manufactured having amorphous properties, comprising the following steps:
- simulating (70) a cooling rate of a reference workpiece (22, 22', 22") during manufacturing for at least one predetermined alloy and at least one predetermined production method, taking into account at least one production method and taking into account parameters of the production method;
- storing (71) reference simulation data (72) specifying the simulated cooling rate;
- receiving (61) a component description (26) specifying a workpiece (24) to be manufactured, wherein the component description (26) is specified by a data structure, and wherein the component description (26) specifies a geometry of the workpiece to be manufactured and an alloy;
- determining (62) a reference component (22, 22', 22") for at least a part of the component description (26), wherein the determination is carried out using pattern recognition (67), wherein the determination (62) of the reference component (22, 22', 22") comprises segmenting (66) the component description (26) into a plurality of component portions (29, 29', 29"), wherein the pattern recognition (67) is carried out for at least one component portion (29, 29', 29");
- reading out (63) first simulation data (27) specifying at least one property of the reference component (22, 22', 22"), wherein the at least one property specifies the simulated cooling rate of the reference workpiece (22, 22', 22"), wherein the stored reference simulation data (72) are read out as the first simulation data (27);
- determining (64) at least one production parameter (28) for manufacturing the workpiece (24) using the first simulation data (27), i.e. also using the parameters of the production method and the simulated cooling rate of the reference component (22, 22', 22"), such that the workpiece (24) has amorphous properties.

2. The method (60) according to claim 1,
**characterized in that**
the segmentation (66) comprises dividing (69) a component geometry specified by the component description (26) using basic shapes and/or joints.

3. The method (60) according to any of the preceding claims,
**characterized in that**
the determination (62) of the reference component (22, 22', 22") comprises loading a reference data set, in particular from a database unit (21), wherein the reference data set specifies a plurality of reference components (22, 22', 22"), and wherein the determination (62) comprises selecting the reference component (22, 22', 22") from the reference data set using the pattern recognition (67).

4. The method (60) according to any of the preceding claims,
**characterized in that**
the pattern recognition (67) comprises a classification (68), in particular using an artificial neural network, wherein the classification (68) assigns a reference component (22, 22'), in particular of a/the reference data set, to component portions (29, 29', 29"), in particular pixels, voxels, volume elements and/or partial portions of the component geometry.

5. The method (60) according to any of the preceding claims,
**characterized in that**
the first simulation data (27) specify a cooling rate of the reference component (22, 22', 22") for a predetermined alloy and a predetermined production method.

6. The method (60) according to any of the preceding claims,
**characterized in that**
the first simulation data (27) specify mechanical properties of the reference component (22, 22', 22") for a predetermined alloy, a predetermined production method and/or a cooling rate.

7. The method (60) according to any of the preceding claims,
**characterized in that**
the simulation (70) of the cooling rate of the reference workpiece (22, 22', 22") during manufacturing is carried out for a plurality of predetermined alloys and for a plurality of predetermined production methods, preferably simulation (70) of the cooling rate of the reference workpiece (22, 22', 22") after an injection process in an injection molding method;
and wherein the storage (71) of the reference simulation data (72), comprises storage in a database unit (21).

8. The method (60) according to any of the preceding claims, in particular according to claim 7,
**characterized by**
determining (80) at least one mechanical property of the workpiece (24) to be manufactured using a simulated cooling rate of the reference component (22, 22', 22"), wherein the determination (64) of the at least one production parameter (28) is also carried out using the determined at least one mechanical property.

9. The method according to any of the preceding claims,
**characterized in that**
the simulation (70) of the cooling rate is carried out taking into account parameters of a production method, e.g. a punch speed, an initial temperature and/or a mold geometry.

10. The method (60) according to any of the preceding claims,
**characterized in that**
a/the simulation (70, 81) of a/the cooling rate and/or a/the mechanical load case is carried out only if the stored first simulation data (27) for a reference component (22, 22') do not specify a cooling rate or result data for an identical load case.

11. A production method (90) for producing a workpiece, comprising the following steps:
- determining (91) at least one production parameter (28) by a method according to any of the preceding claims,
- producing (92) the workpiece using the at least one production parameter (28).

12. A computer-readable storage medium containing instructions for causing at least one processor to implement a method according to any of the preceding claims when the instructions are executed by the at least one processor.

13. A construction system (20), comprising:
- a receiving unit (30) designed to receive a component description (26) specifying a workpiece (24) to be manufactured, wherein the component description (26) is specified by a data structure, and wherein the component description (26) specifies a geometry of the workpiece to be manufactured and an alloy;
- a determination unit (32) designed to determine a reference component (22, 22') for at least a part of the component description (26), the determination unit (32) being designed to carry out the determination using pattern recognition, wherein the determination unit is further designed to carry out segmentation of the component description into a plurality of component portions, the determination unit being designed to carry out the pattern recognition for at least one component portion, wherein the determination unit comprises a simulation unit designed to simulate a cooling rate of a reference component during manufacturing for at least one predetermined alloy and for at least one predetermined production method, taking into account at least one production method and taking into account parameters of the production method;
- a database unit (21) designed to store reference simulation data specifying the simulated cooling rate;
- a reading unit (31) designed to read out the stored reference simulation data as first simulation data (27) from the database unit;
- a parameter determination unit (33) designed to determine at least one production parameter (28) for manufacturing the workpiece (24) using the first simulation data (27), also using the parameters of the production method and the simulated cooling rate of the reference component (22, 22', 22"), such that the workpiece (24) has amorphous properties.

14. The construction system (20) according to claim 13,
**characterized by**
a production machine (1) designed to produce the workpiece (24) to be manufactured using the at least one production parameter (28).

## Revendications

1. Procédé (60) mis en oeuvre par ordinateur permettant de déterminer au moins un paramètre de fabrication (28) d'une pièce (24) à usiner comportant des propriétés amorphes, présentant les étapes suivantes :
- simulation (70) d'une vitesse de refroidissement d'une pièce de référence (22, 22', 22") pendant l'usinage pour au moins un alliage prédéterminé et au moins un procédé de fabrication prédéterminé, en tenant compte d'au moins un procédé de fabrication et en tenant compte de paramètres du procédé de fabrication ;
- mémorisation (71) de données de simulation de référence (72) qui indiquent la vitesse de refroidissement simulée ;
- réception (61) d'une description de composant (26) qui indique une pièce (24) à usiner, dans lequel la description de composant (26) est indiquée par une structure de données et dans lequel la description de composant (26) indique une géométrie de la pièce à usiner et un alliage ;
- détermination (62) d'un composant de référence (22, 22', 22") pour au moins une partie de la description de composant (26), dans lequel la détermination est exécutée à l'aide d'une reconnaissance de modèle (67), dans lequel la détermination (62) du composant de référence (22, 22', 22") comprend une segmentation (66) de la description de composant (26) en une pluralité de sections de composant (29, 29`, 29"), dans lequel la reconnaissance de modèle (67) est exécutée pour au moins une section de composant (29, 29`, 29") ;
- lecture (63) de premières données de simulation (27) qui indiquent au moins une propriété du composant de référence (22, 22', 22"), dans lequel l'au moins une propriété indique la vitesse de refroidissement simulée de la pièce de référence (22, 22`, 22"), dans lequel les données de simulation de référence (72) mémorisées sont lues comme premières données de simulation (27) ;
- détermination (64) d'au moins un paramètre de fabrication (28) pour l'usinage de la pièce (24) à l'aide des premières données de simulation (27), donc également à l'aide des paramètres du procédé de fabrication et de la vitesse de refroidissement simulée du composant de référence (22, 22', 22"), de telle sorte que la pièce (24) présente des propriétés amorphes.

2. Procédé (60) selon la revendication 1,
**caractérisé en ce que**
la segmentation (66) comprend une division (69) d'une géométrie de composant indiquée par la description de composant (26) à l'aide de formes de base et/ou de points de liaison.

3. Procédé (60) selon l'une des revendications précédentes,
**caractérisé en ce que**
la détermination (62) du composant de référence (22, 22', 22") comprend un chargement d'un ensemble de données de référence, en particulier à partir d'une unité de base de données (21), dans lequel l'ensemble de données de référence indique une pluralité de composants de référence (22, 22', 22") et dans lequel la détermination (62) comprend une sélection du composant de référence (22, 22', 22") à partir de l'ensemble de données de référence à l'aide de la reconnaissance de modèle (67).

4. Procédé (60) selon l'une des revendications précédentes,
**caractérisé en ce que**
la reconnaissance de modèle (67) comprend une classification (68), en particulier à l'aide d'un réseau de neurones artificiels, dans lequel la classification (68) attribue un composant de référence (22, 22'), en particulier d'un/de l'ensemble de données de référence, à des sections de composant (29, 29', 29"), en particulier des pixels, des voxels, des éléments de volume et/ou des sections partielles de la géométrie de composant.

5. Procédé (60) selon l'une des revendications précédentes,
**caractérisé en ce que**
les premières données de simulation (27) indiquent une vitesse de refroidissement du composant de référence (22, 22', 22") pour un alliage prédéterminé et un procédé de fabrication prédéterminé.

6. Procédé (60) selon l'une des revendications précédentes,
**caractérisé en ce que**
les premières données de simulation (27) indiquent des propriétés mécaniques du composant de référence (22, 22', 22") pour un alliage prédéterminé, un procédé de fabrication prédéterminé et/ou une vitesse de refroidissement.

7. Procédé (60) selon l'une des revendications précédentes,
**caractérisé en ce que**
la simulation (70) de la vitesse de refroidissement de la pièce de référence (22, 22', 22") pendant l'usinage est exécutée pour une pluralité d'alliages prédéterminés et pour une pluralité de procédés de fabrication prédéterminés, de préférence la simulation (70) de la vitesse de refroidissement de la pièce de référence (22, 22', 22") après un processus d'injection lors d'un procédé de moulage par injection ;
et dans lequel la mémorisation (71) des données de simulation de référence (72) comprend une mémorisation dans une unité de base de données (21).

8. Procédé (60) selon l'une des revendications précédentes, en particulier selon la revendication 7,
**caractérisé par**
la détermination (80) d'au moins une propriété mécanique de la pièce (24) à usiner à l'aide d'une vitesse de refroidissement simulée du composant de référence (22, 22', 22"), dans lequel la détermination (64) de l'au moins un paramètre de fabrication (28) est également exécutée à l'aide de l'au moins une propriété mécanique déterminée.

9. Procédé selon l'une des revendications précédentes,
**caractérisé en ce que**
la simulation (70) de la vitesse de refroidissement est exécutée en tenant compte de paramètres d'un procédé de fabrication, par ex. d'une vitesse de poinçon, d'une température initiale et/ou d'une géométrie de forme.

10. Procédé (60) selon l'une des revendications précédentes,
**caractérisé en ce que**
une/la simulation (70, 81) d'une/de la vitesse de refroidissement et/ou d'un/du cas de charge mécanique n'est exécutée que si les premières données de simulation (27) mémorisées pour un composant de référence (22, 22') n'indiquent pas de vitesse de refroidissement ou pas de données de résultat pour un cas de charge identique.

11. Procédé de fabrication (90) permettant la fabrication d'une pièce, comprenant les étapes suivantes :
- détermination (91) d'au moins un paramètre de fabrication (28) par un procédé selon l'une des revendications précédentes,
- fabrication (92) de la pièce à l'aide de l'au moins un paramètre de fabrication (28).

12. Support de stockage lisible par ordinateur contenant des instructions qui amènent au moins un processeur à mettre en oeuvre un procédé selon l'une des revendications précédentes lorsque les instructions sont exécutées par l'au moins un processeur.

13. Système de construction (20), présentant les éléments suivants :
- une unité de réception (30) qui est configurée pour recevoir une description de composant (26) indiquant une pièce (24) à usiner, dans lequel la description de composant (26) est indiquée par une structure de données et dans lequel la description de composant (26) indique une géométrie de la pièce à usiner et un alliage ;
- une unité de détermination (32) qui est configurée pour déterminer un composant de référence (22, 22') pour au moins une partie de la description de composant (26), dans lequel l'unité de détermination (32) est configurée pour exécuter la détermination à l'aide d'une reconnaissance de modèle, dans lequel l'unité de détermination est en outre configurée pour exécuter une segmentation de la description de composant en une pluralité de sections de composant, dans lequel l'unité de détermination est configurée pour exécuter la reconnaissance de modèle pour au moins une section de composant, dans lequel l'unité de détermination présente une unité de simulation qui est configurée pour simuler une vitesse de refroidissement d'un composant de référence pendant l'usinage pour au moins un alliage prédéterminé et pour au moins un procédé de fabrication prédéterminé, en tenant compte d'au moins un procédé de fabrication et en tenant compte de paramètres du procédé de fabrication ;
- une unité de base de données (21) qui est configurée pour mémoriser des données de simulation de référence indiquant la vitesse de refroidissement simulée ;
- une unité de lecture (31) qui est configurée pour lire les données de simulation de référence mémorisées en tant que premières données de simulation (27) à partir de l'unité de base de données ;
- une unité de détermination de paramètre (33) qui est configurée pour déterminer au moins un paramètre de fabrication (28) pour l'usinage de la pièce (24) à l'aide des premières données de simulation (27), également à l'aide du paramètre du procédé de fabrication et de la vitesse de refroidissement simulée du composant de référence (22, 22', 22"), de telle sorte que la pièce (24) présente des propriétés amorphes.

14. Système de construction (20) selon la revendication 13,
**caractérisé par**
une machine de fabrication (1) qui est conçue pour fabriquer la pièce (24) à usiner à l'aide de l'au moins un paramètre de fabrication (28).
